# FASCICULE DE BREVET EUROPEEN

(11) **EP 0 626 653 B1**
(45) Date de publication et mention de la délivrance du brevet: **28.11.2001**
(21) Numéro de dépôt: 94410036.1
(22) Date de dépôt: 20.05.1994
(51) Int. Cl.: G06T 9/00, G06F 9/32, G06F 9/38

(54) **Système de traitement d'images**
Bildverarbeitungssystem
Image processing system

(30) Priorité: 29.10.1993 FR 9313293; 27.05.1993 FR 9306612
(43) Date de publication de la demande: 30.11.1994
(73) Titulaire: STMicroelectronics S.A., 94250 Gentilly (FR)
(72) Inventeur: Artieri, Alain, F-38240 Meylan (FR)
(74) Mandataire: de Beaumont, Michel

(56) Documents cités:
- DE-A- 3 545 106
- US-A- 4 800 441
- DIGITAL IMAGE PROCESSING APPLICATIONS, LOS ANGELES, CA, USA, 17-20 JAN. 1989, 140 - 147, ISSN 0277-786X Tsai Y T 'Real-time architecture for error-tolerant color picture compression'
- IEE COLLOQUIUM ON 'PARALLEL ARCHITECTURES FOR IMAGE PROCESSING APPLICATIONS' (DIGEST NO.086), LONDON, UK, 22 APRIL 1991, 8/1 - 6 Chong M N et al 'Pipeline functional algorithms, data partitioning for adaptive transform coding algorithms'

## Description

La présente invention concerne les systèmes de traitement d'images et en particulier un système de décodage d'image codée selon une norme MPEG.

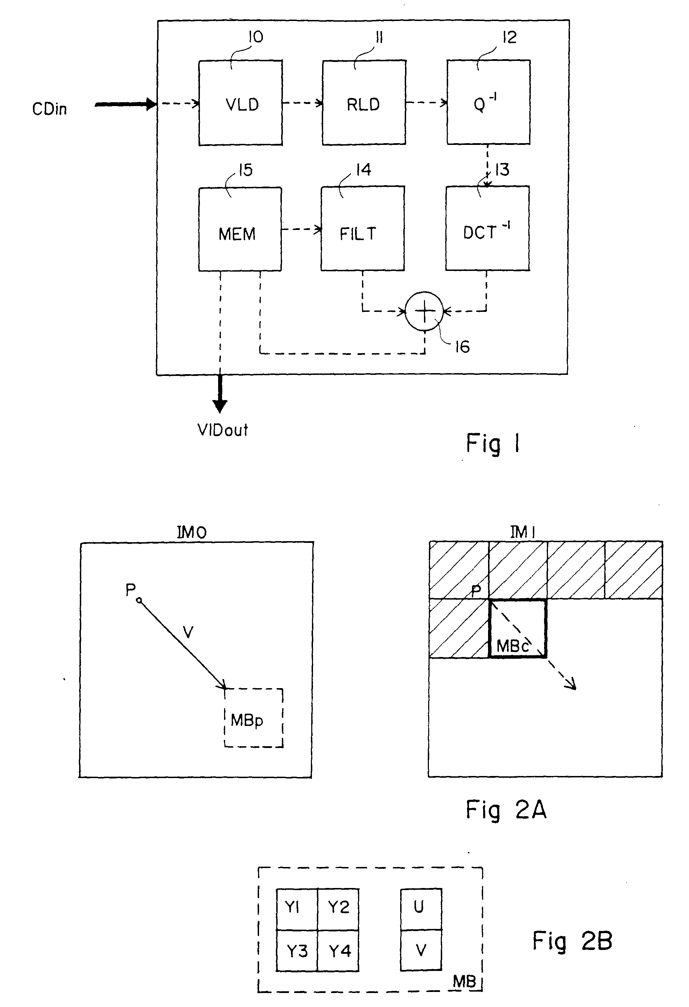

La figure 1 représente les principaux éléments d'un décodeur MPEG. Tout décodeur MPEG, notamment pour la norme MPEG 2, comprend généralement un décodeur de mots de longueur variable 10 (VLD), un décodeur de chaînes de zéros 11 (RLD), un circuit de quantification inverse 12 (Q⁻¹), un circuit de transformée cosinus discrète inverse 13 (DCT⁻¹), un filtre demi-pixel 14, et une mémoire 15. Les données codées entrent par un bus CDin et les données décodées sortent par un bus VIDout. Entre l'entrée et la sortie, les données passent dans les circuits de traitement 10 à 13 dans l'ordre indiqué ci-dessus, ce qui est illustré par des flèches en pointillés. La sortie du décodeur est fournie par un additionneur 16 qui somme les sorties du filtre 14 et du circuit de transformée cosinus 13. Le filtre 14 a besoin d'une portion d'image précédemment décodée stockée dans la mémoire 15.

La figure 2A illustre une étape de décodage d'une portion d'image IM1 en cours de reconstruction. Le décodage d'une image est effectué macrobloc par macrobloc, où un macrobloc correspond généralement à un bloc d'image de 16x16 pixels.

La figure 2B illustre un exemple de format, noté 4:2:0, d'un macrobloc MB. Ce macrobloc comprend un bloc de luminance formé de quatre blocs Y1 à Y4 de 8x8 pixels et un bloc de chrominance formé de deux blocs U et V de 8x8 pixels. Un autre format possible est le format noté 4:2:2 où le bloc de chrominance comprend deux blocs de 8x16 pixels.

Dans l'image courante IM1 de la figure 2A, on décode un macrobloc courant MBc, des macroblocs précédemment décodés étant représentés par des hachures. Dans le cas général, le macrobloc MBc est reconstruit à partir d'un macrobloc prédicteur MBp cherché dans une image précédemment décodée IMO. Pour trouver ce macrobloc prédicteur MBp, les données servant au décodage du macrobloc MBc fournissent un vecteur de compensation de mouvement V qui définit la position du macrobloc prédicteur MBp par rapport à la position P du macrobloc MBc dans l'image.

Le macrobloc prédicteur MBp est cherché dans la mémoire 15 stockant l'image précédemment décodée IMO et fourni au filtre 14 tandis que le circuit de transformée cosinus 13 traite des données correspondant au macrobloc MBc.

Le décodage qui vient d'être décrit est un décodage dit de type prédit. On dit aussi que le macrobloc décodé est de type prédit. Selon les normes MPEG, il existe trois types principaux de macroblocs, dits "intra", "prédit" et "bidirectionnel".

Un macrobloc intra correspond directement à un bloc d'image, c'est-à-dire qu'il n'est pas combiné à un macrobloc prédicteur à sa sortie du circuit de transformée cosinus 13.

Un macrobloc prédit, décrit ci-dessus, est combiné à un macrobloc d'une image précédemment décodée, antérieure, dans l'ordre d'affichage, à l'image en cours de reconstruction.

Un macrobloc bidirectionnel est combiné à deux macroblocs prédicteurs de respectivement deux images précédemment décodées. Ces deux images sont respectivement antérieure (image directe) et postérieure (image rétrograde), dans l'ordre d'affichage, à l'image en cours de reconstruction. Ainsi, les images codées arrivent dans un ordre différent de celui d'affichage.

Chacun des macroblocs prédit ou bidirectionnel est en outre de type progressif ou entrelacé. Quand le macrobloc est progressif, le circuit DCT⁻¹ fournit les rangées du macrobloc par ordre consécutif. Quand le macrobloc est entrelacé, le circuit DCT⁻¹ fournit d'abord les rangées paires du macrobloc, puis les rangées impaires. En outre, un macrobloc prédicteur servant à décoder un macrobloc prédit ou bidirectionnel est également de type progressif ou entrelacé. Quand le macrobloc prédicteur est entrelacé, il est divisé en deux demi-macroblocs, l'un correspondant à des rangées paires, et l'autre à des rangées impaires, chaque demi-macrobloc prédicteur étant cherché à des endroits différents d'une même image précédemment décodée.

Une image est aussi de type intra, prédit ou bidirectionnel. Une image de type intra ne contient que des macroblocs intra, une image de type prédit contient des macroblocs intra ou prédits, et une image de type bidirectionnel contient des macroblocs intra, prédits ou bidirectionnels.

Pour fournir les différents paramètres de décodage aux différents circuits du décodeur, notamment les vecteurs V et les types de macrobloc, le flot de données codées comprend des en-têtes. Il y a plusieurs en-têtes qui sont :
- un en-tête de séquence d'images qui comprend notamment deux tables de quantification à fournir au circuit de quantification inverse 12, l'une servant aux macroblocs de type intra de la séquence, et l'autre aux macroblocs de type prédit ou bidirectionnel ;
- un en-tête de groupe d'images d'une séquence, qui ne comprend pas d'informations servant au décodage ;
- un en-tête d'image qui comprend le type (prédit, intra, bidirectionnel) de l'image et des informations sur l'exploitation des vecteurs de compensation de mouvement ;
- un en-tête de tranche d'image comprenant des informations servant au rattrapage d'erreurs ; et
- un en-tête de macrobloc comprenant le type du macrobloc, un coefficient d'échelle de quantification à fournir au circuit de quantification inverse 12, et les composantes des vecteurs de compensation de mouvement. Il peut y avoir jusqu'à quatre vecteurs, dans le cas du traitement d'un macrobloc bidirectionnel entrelacé.

Les en-têtes de hiérarchie élevée (image, groupe, séquence) peuvent en outre comprendre des données privées servant, par exemple, à afficher du texte en même temps qu'une image. Ces données privées peuvent aussi être utilisées par des éléments externes au décodeur.

Les divers circuits de traitement d'un décodeur MPEG sont souvent arrangés selon une architecture série, couramment dite architecture "pipeline", qui permet de traiter des débits de données élevés, mais qui est très complexe et rigide, c'est-à-dire qu'elle est difficilement adaptable à des variantes des normes et convient peu pour exploiter des données d'affichage et privées.

La solution la plus simple et la moins coûteuse est de relier les divers circuits de traitement à la mémoire par un bus commun géré par un processeur multi-tâches.

La demande de brevet européen 0 503 956 (C-Cube) décrit un tel système comprenant un processeur gérant les transferts sur le bus et trois coprocesseurs effectuant les traitements correspondant aux circuits 10 à 14. Chaque type de transfert différent à effectuer sur le bus correspond à une tâche effectuée par le processeur. Toutes les tâches sont concurrentes et exécutées sur des interruptions du processeur, générées par les coprocesseurs. Les coprocesseurs échangent par le bus les données à traiter et reçoivent par le bus des instructions fournies par le processeur.

Ce système est simple, mais il s'avère qu'il ne permet pas de traiter les débits de données exigés actuellement.

Un objet de la présente invention est de prévoir un système de décompression d'images particulièrement rapide qui soit de structure relativement simple.

Un autre objet de la présente invention est de prévoir un tel système de décompression qui puisse facilement être mis en parallèle avec des systèmes de décompression identiques pour traiter des débits de données comprimées particulièrement élevés.

Pour atteindre ces objets, la présente invention prévoit un décodeur à architecture mixte, c'est-à-dire que certains des éléments de traitement sont reliés entre eux et à une mémoire d'image par un premier bus et que d'autres sont reliés selon une architecture pipeline. Ces autres éléments de traitement sont appelés ci-après circuit pipeline. Un deuxième bus est prévu pour fournir les données à traiter au premier élément du circuit pipeline ainsi que des paramètres de décodage aux éléments du système qui en requièrent.

Avec cette structure, le circuit pipeline traite les données en série sans qu'il soit nécessaire de les échanger avec la mémoire par le premier bus. En outre, le premier bus est déchargé du rôle de transmission des paramètres de décodage, ceux-ci étant transmis par le deuxième bus. Ainsi, le nombre d'échanges sur le premier bus correspondant à une étape de décodage donnée est notablement réduit, ce qui permet d'augmenter les performances du système. Le système conserve une grande souplesse liée à l'utilisation d'un système d'échange par bus. Cette souplesse est accrue par un choix optimal des éléments à inclure dans le circuit pipeline.

La présente invention vise plus particulièrement un système de traitement de données d'image comprimées selon la revendication 1.

Selon un mode de réalisation de la présente invention, chaque paquet de données comprimées est précédé d'un en-tête de bloc et les paquets sont rassemblés en groupes successifs, chaque groupe de paquets étant précédé d'un en-tête de groupe contenant des paramètres de décodage des paquets du groupe ainsi qu'éventuellement des informations privées et d'affichage sur écran. Le système comprend en outre un bus de processeur géré par un microprocesseur pour fournir les paramètres de décodage de groupe et les informations privées et d'affichage aux éléments du système qui les requièrent ; une mémoire tampon, accessible par le bus de processeur, recevant les données comprimées par le bus mémoire ; et un détecteur d'en-tête de groupe coopérant avec cette mémoire tampon pour générer une interruption du microprocesseur.

Selon un mode de réalisation de la présente invention, un transfert de données entre deux éléments reliés au bus mémoire correspond à une tâche spécifique qui doit être initiée ou continuée lorque l'un des deux éléments émet une requête pour fournir ou recevoir des données, toutes les tâches possibles étant des tâches concurrentes mises en oeuvre par le contrôleur mémoire par une gestion de priorité des requêtes.

Selon un mode de réalisation de la présente invention, des éléments devant échanger des données avec la mémoire d'image sont reliés au bus mémoire par des mémoires tampon respectives à écriture ou à lecture par le bus mémoire. Une mémoire tampon à écriture est vidée par l'élément associé et émet une requête pour recevoir des données par le bus mémoire quand son contenu atteint une limite inférieure. Une mémoire tampon à lecture est remplie par l'élément associé et émet une requête pour fournir des données sur le bus mémoire quand son contenu atteint une limite supérieure.

Selon un mode de réalisation de la présente invention, le système comprend : un décodeur de mots de longueur variable (VLD) formant ledit élément de traitement maître ; un décodeur de chaînes de zéros (RLD) formant un premier élément du circuit pipeline et recevant par le bus de paramètres les données traitées par le décodeur de mots de longueur variable ; un circuit de quantification inverse formant un deuxième élément du circuit pipeline et recevant par le bus de paramètres des coefficients de quantification ; un circuit de transformée cosinus inverse formant un troisième élément du circuit pipeline ; le contrôleur mémoire recevant par le bus de paramètres des vecteurs de compensation de mouvement ; un filtre recevant par le bus de paramètres un paramètre de type de bloc d'image, ce filtre émettant des requêtes distinctes, selon le paramètre de type de bloc, pour recevoir des données correspondantes fournies par le bus mémoire en fonction des vecteurs que le contrôleur mémoire reçoit ; et un additionneur pour fournir sur le bus mémoire la somme des sorties du filtre et du circuit de transformée cosinus.

Selon un mode de réalisation de la présente invention, le détecteur d'en-tête de groupe est prévu pour générer une interruption du microprocesseur lorsque la mémoire tampon associée contient un en-tête de séquence d'images ou un en-tête d'image, le microprocesseur étant prévu pour répondre à cette interruption en lisant dans la mémoire tampon associée au détecteur d'en-tête de groupe des tables de quantification qu'il fournit au circuit de quantification inverse, des informations de type d'image et d'amplitude de vecteur de compensation de mouvement qu'il fournit au décodeur de mots de longueur variable (VLD), et des informations de réglage d'affichage qu'il fournit à un contrôleur d'affichage qui reçoit des données décodées par le bus mémoire.

Selon un mode de réalisation de la présente invention, le contrôleur mémoire comprend : une mémoire d'instruction indépendante dudit bus mémoire, dans laquelle sont stockées les instructions de programmes correspondant respectivement aux tâches de transfert sur le bus mémoire ; une unité de traitement de commandes (ALU) couplée à la mémoire d'instruction pour recevoir de celle-ci les instructions successives à exécuter et connectée pour agir en fonction de ces instructions sur le bus mémoire ; une pluralité de pointeurs d'instruction associés respectivement aux tâches possibles et contenant chacun l'adresse de l'instruction courante à exécuter de la tâche associée, un seul de ces pointeurs étant susceptible d'être validé à la fois pour fournir son contenu en tant qu'adresse d'instruction à la mémoire d'instruction ; un décodeur de niveau de priorité affectant un niveau de priorité prédéterminé à chaque requête et validant le pointeur d'instruction associé à la requête active de niveau de priorité le plus élevé ; et des moyens pour incrémenter le contenu du pointeur d'instruction validé et pour le réinitialiser à l'adresse de début du programme associé lorsque son contenu atteint l'adresse de fin du programme associé.

Selon un mode de réalisation de la présente invention, chaque instruction comprend un champ de commande fourni à l'unité de traitement de commandes (ALU) et un champ de nature d'instruction fourni à un décodeur de préfixe comprenant : des moyens pour autoriser une nouvelle validation de pointeur d'instruction par le décodeur de niveau de priorité si le champ de nature de l'instruction courante est à une première valeur prédéterminée, et des moyens pour initialiser le contenu du pointeur d'instruction validé à l'adresse de début du programme en cours si le champ de nature de l'instruction courante est à une deuxième valeur prédéterminée.

Selon un mode de réalisation de la présente invention, le décodeur de préfixe comprend des moyens pour inhiber l'incrémentation du pointeur d'instruction validé si le champ de nature est à une troisième valeur prédéterminée, de manière que l'instruction courante soit exécutée plusieurs fois de suite, le nombre d'exécutions étant déterminé par cette troisième valeur.

Selon un mode de réalisation de la présente invention, chaque instruction comprend un champ de commande fourni à l'unité de traitement de commandes (ALU) et un champ d'acquittement fourni à des moyens pour, lorsque l'instruction est en cours d'exécution, activer au moins une mémoire tampon reliée au bus mémoire.

Selon un mode de réalisation de la présente invention, l'unité de traitement (ALU) comprend une pluralité de fonctions câblées de calcul d'adresses, chaque fonction étant sélectionnée par un champ d'une instruction de lecture ou écriture en cours d'exécution.

Selon un mode de réalisation de la présente invention, à chaque fonction câblée est associé un registre d'adresses relié au bus mémoire, la fonction câblée étant prévue pour, à chaque exécution d'une instruction dans l'unité de traitement (ALU), modifier de manière adéquate le contenu de son registre d'adresses.

La présente invention prévoit également un système de traitement de données comprimées correspondant à des images, comprenant des moyens de décodage fournissant à une mémoire d'image des données d'image décodées, ces moyens nécessitant, pour décoder un bloc courant d'une image en cours de reconstruction, un bloc prédicteur d'une image précédemment décodée. Le système comprend en fait plusieurs décodeurs associés à des mémoires d'image respectives stockant chacune une tranche spécifique de blocs correspondants de plusieurs images ainsi qu'au moins une marge dans laquelle est susceptible de se trouver un bloc prédicteur servant à reconstruire un bloc de la tranche spécifique.

Selon un mode de réalisation de la présente invention, chaque décodeur considéré comprend des moyens pour stocker dans sa mémoire d'image, en tant que marge, une zone limitrophe d'au moins une autre tranche spécifique et pour fournir à au moins un autre décodeur, en tant que marge, une zone limitrophe de la tranche spécifique associée au décodeur considéré.

Selon un mode de réalisation de la présente invention, chaque décodeur considéré comprend : une première mémoire tampon recevant des blocs d'image de la tranche spécifique ; au moins une deuxième mémoire tampon recevant des blocs d'image d'une zone limitrophe d'une autre tranche spécifique ; un circuit de traitement final fournissant les blocs de la tranche spécifique à la première mémoire tampon du décodeur considéré et à la deuxième mémoire tampon d'un autre décodeur ; et un contrôleur mémoire pour lire les blocs dans la première mémoire tampon et les écrire dans la mémoire d'image à des adresses correspondant à la tranche spécifique et pour lire les blocs dans la deuxième mémoire tampon et les écrire à des adresses correspondant à une marge.

Selon un mode de réalisation de la présente invention, chaque deuxième mémoire tampon est précédée d'un circuit de barrage pour ne stocker dans la deuxième mémoire tampon que les données correspondant à la marge souhaitée.

Selon un mode de réalisation de la présente invention, les images à traiter sont des images de télévision haute définition découpées en tranches horizontales de même hauteur.

Ces objets, caractéristiques et avantages ainsi que d'autres de la présente invention seront exposés en détail dans la description suivante de modes de réalisation particuliers faite à titre non-limitatif à l'aide des figures jointes parmi lesquelles :
la figure 1, précédemment décrite, représente les principaux éléments d'un système de décompression MPEG ;
la figure 2A illustre une étape de décodage d'un macrobloc d'image ;
la figure 2B représente un exemple de constitution de macrobloc ;
la figure 3 représente un mode de réalisation d'architecture d'un système de décompression, ou décodeur MPEG, selon la présente invention ;
la figure 4 représente un chronogramme illustrant le fonctionnement du système de décompression de la figure 3 ;
la figure 5 représente un mode de réalisation avantageux de contrôleur mémoire selon la présente invention ;
la figure 6 représente un autre mode de réalisation d'architecture d'un système de décompression selon l'invention ;
la figure 7 illustre une image de télévision haute définition qui doit être traitée par tranches par plusieurs systèmes de décompression parallèles ;
la figure 8 représente plusieurs systèmes de décompression mis en parallèle pour traiter une image haute définition ; et
la figure 9 représente partiellement un mode de réalisation de structure interne de décodeur selon l'invention permettant une mise en parallèle particulièrement facile.

### Architecture générale du décodeur MPEG

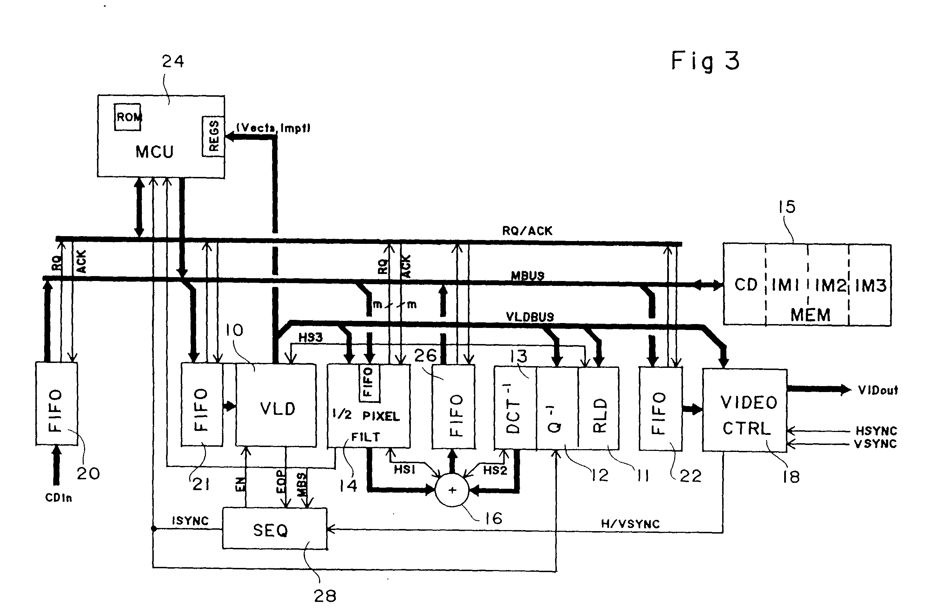

En figure 3, les éléments figurant déjà dans la figure 1 sont désignés par des mêmes références.

Un bus, ci-après bus mémoire MBUS, relie la mémoire d'image 15 au bus d'entrée CDin de données comprimées, à l'entrée du décodeur de mots de longueur variable (VLD) 10, à l'entrée du filtre demi-pixel 14 et à l'entrée d'un contrôleur d'affichage 18. Le bus CDin, le décodeur 10 et le contrôleur d'affichage 18 sont reliés au bus mémoire MBUS par l'intermédiaire de mémoires tampon (FIFO) respectives 20, 21 et 22. Le filtre demi-pixel 14 comprend deux mémoires FIFO internes reliées au bus mémoire MBUS. Les échanges sur le bus mémoire MBUS sont gérés par un contrôleur mémoire (MCU) 24 qui est chargé d'effectuer, sur requête des mémoires FIFO, des opérations de transfert entre ces mémoires FIFO et la mémoire d'image. Pour cela, le contrôleur mémoire 24 reçoit une pluralité de requêtes RQ et fournit des acquittements correspondants ACK. Ce contrôleur mémoire peut être du type de celui décrit dans la demande de brevet européen 0 503 956 susmentionnée. Un mode de réalisation plus avantageux de ce contrôleur mémoire sera toutefois décrit ultérieurement.

Selon l'invention, le décodeur de chaînes de zéros (RLD) 11, le circuit de quantification inverse (Q⁻¹) 12 et le circuit de transformée cosinus discrète inverse (DCT⁻¹) 13 sont reliés selon une architecture pipeline, c'est-à-dire que ces circuits 11 à 13 traitent l'un après l'autre des données à décoder sans que ces données transitent de façon intermédiaire dans une mémoire (15). L'ensemble des circuits 11 à 13 est appelé circuit pipeline ci-après. La sortie du filtre demi-pixel 14 est sommée à la sortie du circuit DCT⁻¹ 13 par un additionneur 16 qui est relié au bus MBUS par l'intermédiaire d'une mémoire FIFO 26 gérée par le contrôleur mémoire 24. Des liaisons de gestion de communication HS1 et HS2 relient l'additionneur 16 au circuit VLD et au circuit DCT⁻¹, respectivement.

Selon un aspect de l'invention, le circuit VLD 10 gère un bus VLDBUS destiné à fournir au circuit RLD 11 des données à traiter par le circuit pipeline 11-13 ainsi que des paramètres au filtre demi-pixel 14, au circuit de quantification inverse 12, au contrôleur d'affichage 18, et au contrôleur mémoire 24. Un circuit VLD décode généralement les en-têtes des données comprimées qui lui arrivent. Comme on l'a précédemment mentionné, ces en-têtes comprennent des paramètres de décodage à fournir à divers éléments du système.

Un en-tête de macrobloc comprend un coefficient d'échelle de quantification à fournir au circuit de quantification inverse 12, un paramètre de type de macrobloc et les composantes de vecteurs de compensation de mouvement. Ces paramètres de décodage sont décodés par le circuit VLD et écrits respectivement dans des registres dédiés du circuit de quantification inverse 12, du filtre demi-pixel 14 et du contrôleur mémoire 24.

Un en-tête d'image comprend, comme on l'a précédemment mentionné, un paramètre de type d'image et des informations sur l'exploitation des vecteurs de compensation de mouvement. Ces paramètres servent au circuit VLD lui-même pour décoder les vecteurs et les données de macrobloc.

Un en-tête de séquence comprend deux tables de quantification que le circuit VLD extrait et fournit à deux registres respectifs du circuit de quantification inverse 12. Les en-têtes d'image comprennent des paramètres de mise à l'échelle ou de troncature de l'image affichée, que le circuit VLD décode et fournit au contrôleur d'affichage 18.

Le circuit VLD effectue des opérations d'écriture sur le bus VLDBUS au fur et à mesure que ce circuit décode les en-têtes. Les opérations d'écriture du circuit VLD sur le bus VLDBUS peuvent être arrêtées par le circuit RLD 11 lorsque celui-ci ne peut plus reoevoir de données à traiter. Ceci est représenté par une liaison HS3.

Un séquenceur 28 fournit un signal de validation EN du circuit VLD. Ce séquenceur reçoit des signaux de synchronisation d'affichage (horizontale, verticale) H/VSYNC par l'intermédiaire du contrôleur d'affichage 18, un signal de synchronisation de macrobloc MBS du filtre demi-pixel 14 et un signal de fin d'image EOP du circuit VLD 10. Le séquenceur 28 fournit au contrôleur mémoire 24 un signal de synchronisation d'image ISYNC qui est actif lorsque sont actifs le signal de fin d'image EOP et le signal de synchronisation verticale VSYNC. Le rôle du séquenceur 28 sera compris ultérieurement.

Comme on l'a précédemment indiqué, pour reconstruire une image, il est souvent nécessaire d'utiliser des portions d'image de deux images précédemment décodées. Pour cela, la mémoire 15 doit comprendre trois zones d'image IM1, IM2 et IM3 pour stocker l'image en cours de reconstruction et deux images précédemment décodées. La mémoire 15 comprend en outre une zone CD pour stocker en attendant leur traitement des données comprimées arrivant sur le bus CDin.

### Gestion des zones de la mémoire d'image

Pour connaître dans quelles zones mémoire IM1 à IM3 le contrôleur mémoire 24 doit écrire, ce dernier utilise quatre pointeurs d'image ImP+ fournis par le circuit VLD. Ce circuit VLD comprend une unité de calcul des pointeurs d'image à partir des paramètres de type d'image fournis par les en-têtes d'image. On décrit ci-après un exemple de succession d'images et le procédé de calcul des pointeurs d'image.

On considère la succession suivante d'images comprimées arrivant sur le bus CDin :
I0, P1, B2, B3, P4, B5, B6 où les lettres I, P et B désignent respectivement une image intra, une image prédite et une image bidirectionnelle. Selon les normes MPEG, une image bidirectionnelle ne peut servir à calculer une autre image. Ainsi, la reconstruction de l'image P1 nécessite l'image I0, la reconstruction des images B2 et B3 nécessite les images I0 et P1, la reconstruction de l'image P4 nécessite l'image P1 et la reconstruction des images B5 et B6 nécessite les images P4 et P1.

L'ordre d'affichage de ces images est le suivant :
I0, B2, B3, P1, B5, P4, B6 puisqu'une image prédite P est reconstruite à partir d'une image antérieure dans l'ordre d'affichage et qu'une image bidirectionnelle B est reconstruite à partir de deux images, l'une postérieure et l'autre antérieure dans l'ordre d'affichage.

Pour déterminer la zone mémoire IM1 à IM3 à laquelle le contrôleur mémoire 24 doit accéder, on utilise quatre pointeurs d'image RP, FP, BP et DP indiquant respectivement les emplacements de l'image en cours de reconstruction, de l'image postérieure, de l'image antérieure et de l'image en cours d'affichage. Le tableau suivant résume les valeurs des pointeurs d'image lors du décodage des images de la succession susmentionnée.

| | | | | | | |
|---|---|---|---|---|---|---|
| Décodage | I0 | P1 | B2 | B3 | P4 | B5 |
| Affichage | - | I0 | B2 | B3 | P1 | B5 |
| RP | IM1 | IM2 | IM3 | IM3 | IM1 | IM3 |
| FP | - | IM1 | IM1 | IM1 | IM2 | IM2 |
| BP | - | - | IM2 | IM2 | - | IM1 |
| DP | - | IM1 | IM3 | IM3 | IM2 | IM3 |

Lorsque la première image I0 est décodée, aucune image n'est encore à afficher. Le pointeur d'image reconstruite RP indique une zone vide, par exemple la zone IM1, pour stocker l'image I0.

Lorsque l'image P1 est décodée, l'image I0 est celle qui doit être affichée. Le pointeur d'image reconstruite RP indique par exemple la zone IM2 et le pointeur d'image affichée DP indique la zone IM1 dans laquelle se trouve l'image I0. Comme l'image prédite P1 utilise dans sa reconstruction l'image I0, antérieure dans l'ordre d'affichage, le pointeur d'image antérieure FP indique également la zone IM1.

Lorsque l'image bidirectionnelle B2 est décodée, cette image B2 est également l'image à afficher. Les pointeurs d'image reconstruite RP et d'image affichée DP indiquent la zone IM3 encore libre. L'image B2 utilise pour son décodage l'image antérieure I0 et l'image postérieure P1 ; les pointeurs d'image antérieure et postérieure FP, BP, indiquent respectivement les zones IM1 et IM2.

Pour pouvoir afficher une image en cours de décodage, l'affichage réel est généralement effectué en retard d'approximativement une demi-image ; la zone IM3 est suffisamment remplie lorsque l'on commence à afficher l'image B2.

Lorsque l'image B3 est décodée, elle sert également d'image à afficher. Comme l'image B3 utilise pour son décodage également les images 10 et P1, ces images 10 et P1 restent stockées dans les zones IM1 et IM2 toujours indiquées par les pointeurs d'image antérieure FP et d'image postérieure BP. L'image B3 ne peut être stockée que dans la zone IM3, indiquée par les pointeurs d'image reconstruite RP et d'image affichée DP.

Toutefois, au moment où l'on commence à reconstruire l'image B3 dans la zone IM3, l'image B2, également stockée dans la zone IM3, est en cours d'affichage. Si l'image en cours d'affichage B2 risque d'être écrasée par l'image en cours de reconstruction B3, on arrête le circuit VLD qui est en train de fournir les données de l'image B3. Le rôle du séquenceur 28 précédemment mentionné est justement d'arrêter le circuit VLD en désactivant le signal de validation EN lorsque le nombre de macroblocs décodés risque de correspondre à une fraction d'image supérieure à la fraction d'image affichée. La taille de cette fraction est déterminée par le comptage du nombre d'impulsions de synchronisation horizontale HSYNC et le nombre de macroblocs décodés est déterminé par un comptage des impulsions de synchronisation de macrobloc MBS.

Lorsque l'on décode l'image P4, l'image P1 doit être affichée. L'image P4 est stockée dans la zone IM1 qui est maintenant libre ; le pointeur d'image reconstruite RP indique la zone IM1. Le pointeur d'image affichée DP indique la zone IM2 où est stockée l'image P1. L'image P4 utilise pour son décodage l'image antérieure P1 ; le pointeur d'image antérieure FP indique la zone IM2.

Lorsque l'image B5 est décodée, celle-ci doit également être affichée. L'image B5 est stockée dans la zone IM3 qui est libérée ; les pointeurs d'image reconstruite RP et d'image affichée DP indiquent la zone IM3. L'image B5 utilise les images antérieure P1 et postérieure P4 précédemment décodées ; les pointeurs d'image antérieure FP et postérieure BP indiquent respectivement les zones IM2 et IM1...

### Fonctionnement du décodeur MPEG

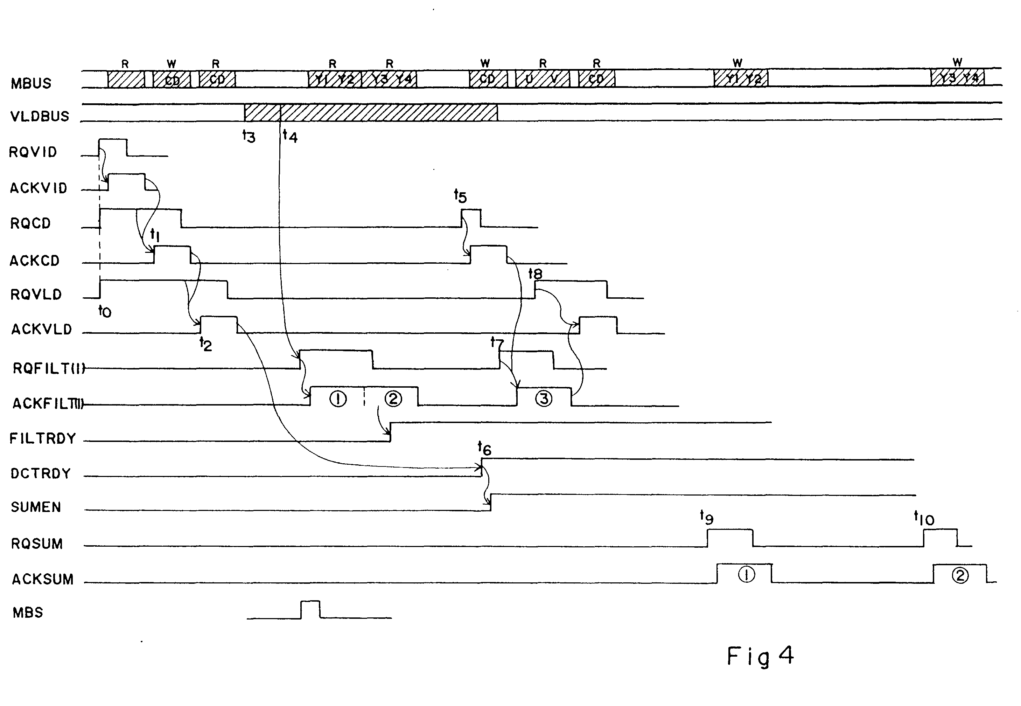

La figure 4 représente un chronogramme illustrant de manière simplifiée un exemple de fonctionnement du système de la figure 3. La figure 4 représente des signaux de requête RQ et des signaux d'acquittement, ACK correspondants des divers éléments du système, par ordre de priorité décroissante. On a également représenté des activités sur les bus mémoire MBUS et de paramètres VLDBUS par des zones hachurées.

La première paire de signaux de requête et d'acquittement RQVID, ACKVID correspond à la mémoire FIFO 22 du contrôleur d'affichage 18. La deuxième paire RQCD, ACKCD, correspond à la mémoire FIFO 20 du bus d'entrée de données comprimées CDin. La paire RQVLD, ACKVLD correspond à la mémoire FIFO 21 du circuit VLD 10.

La paire RQFILT(1), ACKFILT(1) correspond à l'une de six requêtes possibles générées par le filtre demi-pixel 14. Et la paire RQSUM, ACKSUM correspond à la mémoire FIFO 26 fournissant les macroblocs reconstruits. On a également représenté l'allure d'un signal FILTRDY servant à indiquer à l'additionneur 16 que le filtre demi-pixel 14 est prêt à fournir des données ; d'un signal DCTRDY servant à indiquer à l'additionneur 16 que le circuit DCT⁻¹ 13 est prêt à fournir des données ; et d'un signal SUMEN servant à valider l'empilement dans la mémoire FIFO 26 des sommes fournies par l'additionneur 16. On a également représenté le signal MBS de synchronisation de macrobloc fourni par le filtre demi-pixel 14 au contrôleur mémoire 24 et au séquenceur 28.

La figure 4 est décrite dans l'exemple où le bus mémoire MBUS comprend un bus de données de 64 bits et où les mémoires FIFO sont d'une capacité de deux paquets de données, un paquet de données correspondant à une fraction de macrobloc. Les mémoires FIFO à écriture sur le bus MBUS (20 et 26) émettent une requête lorsque leur contenu dépasse la moitié de leur capacité et les mémoires FIFO à lecture (21, 22, mémoires FIFO du filtre 14) émettent une requête lorsque leur contenu est inférieur à la moitié de leur capacité.

A un instant t₀, les requêtes RQVID, RQCD et RQVLD sont activées ; les mémoires FIFO 22, 20 et 21 sont pratiquement vides. La requête RQVID étant la plus prioritaire, celle-ci est acquittée par le signal ACKVID peu de temps après l'instant t₀. Pendant que le signal ACKVID est actif, le contrôleur mémoire 24 lit dans la zone adéquate (indiquée par le pointeur d'image affichée DP) de la mémoire 15 des pixels à afficher et les empile dans la mémoire FIFO 22. Lorsque l'état de remplissage de la mémoire FIFO 22 dépasse la moitié de sa capacité, la requête RQVID est désactivée. Toutefois, la tâche continue (le signal ACKVID reste actif) tant que l'on a pas transféré un paquet complet de taille prédéterminée, exploitable par le contrôleur d'affichage 18. (En fait, comme on le verra ultérieurement, pour améliorer l'efficacité du système, une tâche de transfert est subdivisée en plusieurs sous tâches de transfert non inter-ruptibles.)

La mémoire 15 comprend des images stockées par ordre de macrobloc mais ces images doivent être fournies au contrôleur d'affichage 18 par ordre de ligne. Ainsi, la tâche de transfert du contrôleur mémoire 24 consiste aussi à calculer des adresses adéquates pour lire les données dans l'ordre des lignes.

A un instant t₁, juste après la désactivation de l'acquittement ACKVID, la requête RQCD est acquittée par l'activation du signal ACKCD. Le contrôleur mémoire 24 transfère alors les données comprimées de la mémoire FIFO 20 vers la zone CD de la mémoire 15. Lorsque le contenu de la mémoire FIFO 20 est inférieur à la moitié de sa capacité, la requête RQCD est désactivée mais, comme précédemment, le transfert de données continue jusqu'à ce que l'on ait transféré un paquet complet. Les données comprimées sont écrites dans la mémoire 15 dans leur ordre d'arrivée.

A un instant t2, juste après la désactivation du signal d'acquittement ACKCD, la requête RQVLD est acquittée par l'activation du signal ACKVLD. Le contrôleur mémoire 24 transfère alors les données comprimées de la mémoire 15 vers la mémoire FIFO 21, dans l'ordre de leur écriture. Lorsque la mémoire FIFO 21 est pleine de plus de moitié, sa requête RQVLD est désactivée mais le transfert continue jusqu'à ce que l'on ait transféré un paquet complet.

Le circuit VLD commence alors à désempiler et traiter les données contenues dans la mémoire FIFO 21. A un instant t3, le circuit VLD décode un en-tête de macrobloc et fournit les paramètres décodés par le bus VLDBUS aux éléments qui les requièrent. Notamment, un paramètre de type de macrobloc est fourni au filtre demi-pixel 14, un coefficient d'échelle de quantification est fourni au circuit de quantification inverse 12, et des vecteurs sont fournis au contrôleur mémoire 24 ainsi qu'au filtre demi-pixel 14.

A un instant t4, tous les paramètres ont été fournis et le circuit VLD commence à fournir des données à décoder au décodeur de chaînes de zéros 11. Le filtre 14, après avoir reçu le paramètre de type de macrobloc et les vecteurs est prêt à recevoir un macrobloc prédicteur. Il active une requête RQFILT en fonction du paramètre de type de macrobloc qu'il a reçu. Le filtre peut émettre jusqu'à six requêtes différentes sur trois lignes de requête RQFILT, ces différentes requêtes correspondant aux six différents types de macrobloc (intra, prédit, bidirectionnel ; chacun entrelacé ou progressif). Dans le présent exemple, la requête RQFILT(1) correspond à un macrobloc prédit progressif.

Aucune requête plus prioritaire n'étant active, la requête RQFILT(1) est acquittée par l'activation du signal ACKFILT(1). Le signal de synchronisation MBS présente une impulsion en même temps que la requête du filtre est activée, ce qui permet au séquenceur 28 d'incrémenter un compteur de macroblocs pour des raisons susmentionnées et au contrôleur mémoire 24 de valider le ou les vecteurs qui lui ont été fournis par le circuit VLD.

Ainsi, peu après l'instant t₄, l'acquittement ACKFILT(1) est activé et commence le transfert d'un macrobloc prédicteur depuis une zone adéquate (indiquée par le pointeur d'image antérieure FP) de la mémoire 15 vers le filtre 14. Le filtre 14 comprend deux mémoires FIFO, l'une destinée à recevoir des macroblocs directs (d'une image antérieure), et l'autre des macroblocs rétrogrades (d'une image postérieure). Le contrôleur mémoire 24 reçoit dans le présent exemple une requête correspondant à un macrobloc prédit et émet un acquittement ACKFILT(1) permettant de sélectionner la mémoire FIFO de macrobloc direct du filtre 14. Selon la requête du filtre reçue par le contrôleur mémoire 24, ce dernier émet l'un de trois acquittements possibles, servant à sélectionner respectivement dans le filtre 14 la mémoire FIFO de macrobloc direct, la mémoire FIFO de macrobloc rétrograde ou bien à indiquer qu'il doit rester inactif (macrobloc intra).

Si les données sont transférées sur 64 bits sur le bus MBUS et que les macroblocs correspondent à des portions d'image de 16x16 pixels, le transfert d'un macrobloc de format 4:2:0 (figure 2B) est effectué, dans un cas simplifié, en trois phases numérotées 1 à 3 à la figure 4. Les pixels de luminance et de chrominance sont codés sur 8 bits. Ainsi, une donnée transférée sur le bus MBUS correspond à 8 pixels. Chaque phase de transfert est effectuée en 16 cycles pour transférer successivement les deux blocs de luminance Y1, Y2, les deux blocs de luminanoe Y3, Y4 et finalement les deux blocs de chrominance U et V. Les mémoires FIFO du filtre 14 ont une capacité de quatre blocs de 8x8 pixels. Le filtre 14 émet l'une des six requêtes possibles lorsque le contenu de la mémoire FIFO correspondante est inférieur à la moitié de sa capacité.

En réalité, ce qui n'est pas décrit à l'aide de la figure 4, un macrobloc prédicteur fourni au filtre comprend un bloc de luminance (Y1 à Y4) de 17x17 pixels et un bloc de chrominance U et V de 9x18 pixels. En outre, les couples de blocs à transférer (Y1, Y2 ; Y3, Y4 ; U, V) ne sont pas forcément "alignés" sur les 64 bits de données du bus MBUS, ce qui entraîne qu'un bloc de luminance (de 136 bits de large) doit être transféré en trois phases de 17 cycles de lecture, et qu'un bloc de chrominance (de 76 bits de large) doit être transféré en deux phases de 18 cycles de lecture. En effet, chaque ligne de pixels du bloc de luminance se trouve à cheval sur trois mots de 64 bits accessibles par le bus MBUS et chaque ligne du bloc de chrominanoe se trouve à cheval sur deux mots de 64 bits. Le rôle du filtre 14 est en outre d'extraire les blocs de luminance et de chrominance de la masse de données qui lui est fournie.

Au début de la première phase de transfert 1 du cas simplifié, la mémoire FIFO correspondante du filtre 14 est vide. A la fin de la phase 1, on a terminé de transférer les blocs Y1 et Y2, mais le filtre a commencé à vider la mémoire FIFO ; la requête RQFILT(1) reste active et la phase de transfert 2 commence immédiatement. Au cours de la phase 2, la mémoire FIFO est remplie de moitié et la requête RQFILT(1) est désactivée mais la phase de transfert continue jusqu'à ce que l'on ait transféré la totalité des blocs Y3 et Y4.

Lorsque le filtre a reçu les premiers blocs Y1 et Y2, il est prêt à fournir des données filtrées à l'additionneur 16 ; le filtre active une ligne FILTRDY (de la liaison HS1 à la figure 3) pour indiquer ceci à l'additionneur 16 qui répond, par un autre signal non représenté de la liaison HS1, qu'il n'est pas prêt à recevoir les données car le circuit DCT⁻¹ n'est pas encore prêt à fournir des données, ce qui est indiqué par un signal DCTRDY inactif au moment où le signal FILTRDY est activé.

A un instant t₆, le circuit DCT⁻¹ peut commencer à fournir les données qui ont été introduites à partir de l'instant t₄ dans le circuit RLD 11. Le signal DCTRDY de la liaison HS2 est activé et l'additionneur 16 active un signal SUMEN indiquant au filtre 14 et au circuit DCT⁻¹ que les additions peuvent commencer. Les résultats des additions sont empilés dans la mémoire FIFO 26.

A l'instant t9, la mémoire FIFO 26 est remplie de moitié ; elle émet une requête RQSUM. Cette requête est la moins prioritaire, mais aucune autre requête n'étant active, elle est acquittée peu de temps après par l'activation d'un signal d'acquittement ACKSUM. Commence alors une phase de transfert 1 des blocs Y1 et Y2 du macrobloc reconstruit vers la zone adéquate (indiquée par le pointeur d'image reconstruite RP) de la mémoire 15. La requête RQSUM est désactivée au cours du transfert de ces blocs Y1 et Y2, mais le transfert continue jusqu'à ce que la totalité des blocs Y1 et Y2 soit transférée.

A un instant t₁₀, la mémoire FIFO 26 est de nouveau à moitié remplie et commence une phase 2 de transfert des blocs Y3 et Y4 du macrobloc reconstruit...

Ce qui vient d'être décrit est un enchaînement très simplifié des principales tâches effectuées dans le système de la figure 3. En réalité, une tâche quelconque est interrompue aléatoirement par des tâches plus prioritaires.

Par exemple, à un instant t5 antérieur à l'instant t6, la requête RQCD est de nouveau activée pour que les données comprimées contenues dans la mémoire FIFO 20 soient transférées vers la mémoire 15.

A un instant t7, le filtre 14 active la requête RQFILT(1) pour recevoir les blocs de chrominance U et V du macrobloc prédicteur en cours de traitement par le filtre. Cette requête n'est acquittée par le signal d'acquittement ACKFILT(1) que lorsque le signal d'acquittement ACKCD est désactivé, c'est-à-dire lorsqu'un paquet de données comprimées complet a été transféré de la mémoire FIFO 20 vers la mémoire 15. Alors commence le transfert des blocs U et V vers le filtre 14, ce qui correspond à la troisième phase susmentionnée.

A un instant t8, pendant que la requête RQFILT(1) est encore active, survient une requête RQVLD plus prioritaire. Toutefois, le transfert de deux blocs d'un macrobloc (U et V en l'occurence) est une tâche élémentaire non-interruptible. Ainsi, avant d'acquitter le signal RQVLD par l'activation du signal ACKVLD, on attend que la requête ACKFILT(1) soit désactivée.

Etant donné que des tâches peuvent être interrompues à tout instant par des tâches plus prioritaires, les tâches ne s'enchaînent pas de manière périodique. Les divers paramètres de décodage (vecteurs, paramètre de type d'image...) arrivent aux circuits qui les requièrent à des instants imprévisibles. Pour que chaque circuit prenne en compte un paramètre au bon moment, il inclut des registres dans lesquels les paramètres sont empilés au fur et à mesure qu'ils arrivent, et ils sont désempilés ou validés par un signal de synchronisation au fur et à mesure de leur utilisation. Pour cela, on prévoit les signaux de synchronisation MBS, ISYNC et VSYNC.

Le signal MBS est un signal de synchronisation de macrobloc activé par le filtre 14, par exemple, lorsque ce dernier a reçu les paramètres nécessaires pour traiter un macrobloc prédicteur. Ce signal MBS est fourni au contrôleur mémoire 24 afin que ce dernier valide au moment opportun le jeu de vecteurs lui permettant de chercher le ou les macroblocs prédicteurs à fournir au filtre 14.

Le signal ISYNC, actif lorsque le circuit VLD a détecté une fin d'image (EOP) et que le signal de synchronisation verticale VSYNC de l'affichage est activé, sert à valider dans le contrôleur mémoire MCU un jeu de pointeurs d'image ImP+ au moment opportun. Le signal ISYNC sert également à remettre à 0 des registres de calcul du contrôleur mémoire, servant au calcul des adresses des données mémorisées dans la mémoire 15.

Le contrôleur mémoire dont il est question dans le système de la figure 3 est un processeur avantageux particulier décrit plus en détail ci-dessous. En effet, un processeur classique ne communique que par son bus ; il n'est pas prévu pour recevoir des paramètres autrement que par le bus. En outre, dans un processeur classique, une requête correspond à une requête d'interruption, et un acquittement à un addressage en lecture ou en écriture du dispositif (mémoire FIFO) ayant émis la requête.

Il est bien entendu envisageable d'utiliser un processeur classique. Pour cela, les pointeurs d'image ImPt et les vecteurs sont empilés dans des mémoires FIFO reliées au bus mémoire MEUS. Les signaux MBS et ISYNC correspondent alors à des requêtes d'interruption à priorité maximale afin que le processeur vienne lire les paramètres et les stocker dans un registre de travail interne.

### Contrôleur mémoire

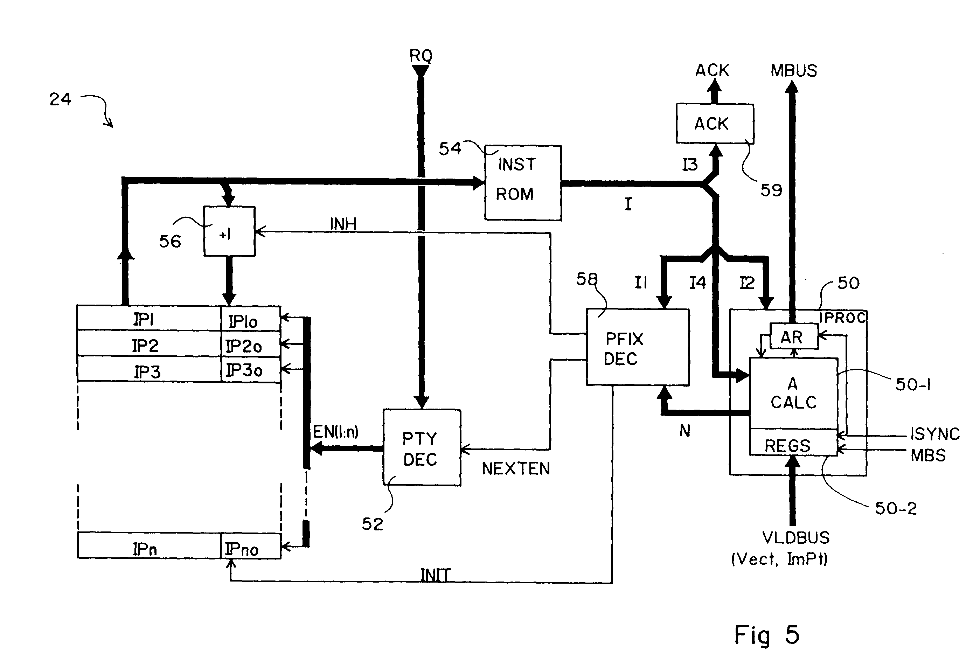

La figure 5 représente un mode de réalisation de contrôleur mémoire selon l'invention, basé sur un processeur particulier particulièrement avantageux. Avant de décrire ce processeur, on commence par décrire une structure de processeur classique, ce qui permettra de mieux faire ressortir les avantages d'un processeur selon l'invention et de mieux comprendre sa structure.

Un processeur classique comprend une unité de traitement d'instructions contenant une unité arithmétique et logique (ALU). L'unité de traitement reçoit, ou charge, dans un premier temps une instruction stockée dans une mémoire ROM ou RAM par l'intermédiaire d'un bus de processeur et, dans un deuxième temps, exécute cette instruction. L'exécution de l'instruction a pour conséquence, de façon générale, un transfert de données sur le bus de processeur entre deux emplacements mémoire ou entre la mémoire et des registres du processeur.

Dans un processeur classique, l'adresse à laquelle se trouve l'instruction à fournir à l'unité de traitement est contenue dans un unique pointeur d'instruction. Si le processeur doit exécuter plusieurs tâches concurrentes, à chacune des tâches est associée une requête. Lorsqu'une requête arrive au processeur, celui-ci est interrompu et exécute un sous-programme d'interruption correspondant à la nouvelle tâche. Pour pouvoir basculer ainsi d'une tâche à une autre, on prévoit classiquement un mécanisme dit de "sauvegarde et restauration de contexte" qui consiste à sauvegarder et restaurer le contenu du pointeur d'instruction lorsque, respectivement, on interrompt l'exécution d'un programme et on reprend son exécution ultérieurement. Ce mécanisme est particulièrement coûteux en cycles d'instruction et limite la vitesse à laquelle les tâches sont exécutées.

Dans la figure 5, un contrôleur mémoire 24 selon l'invention comprend, au contraire, une pluralité de pointeurs d'instruction IP1, IP2... IPn correspondant chacun à une tâche de transfert possible sur le bus mémoire MBUS. Chacun de ces pointeurs, mais un seul à la fois, peut être validé par une ligne de validation EN1 à ENn pour fournir son contenu comme adresse de l'instruction à exécuter par une unité de traitement (IPROC) 50. Les lignes de validation EN sont commandées par un décodeur de niveau de priorité 52 qui reçoit les lignes de requête RQ du bus RQ/ACK. A chaque ligne de requête RQ est associé un niveau de priorité. Il est éventuellement possible d'affecter un même niveau de priorité à plusieurs tâches ; le décodeur doit alors se charger de ne valider qu'un seul pointeur IP à la fois, par exemple en affectant de façon interne des niveaux de priorité différents à ces tâches et en permutant circulairement ces niveaux à chaque exécution d'une instruction ou groupe d'instructions. Ceci revient à dire que des tâches qui auraient un même niveau de priorité ont en fait des niveaux différents qui permutent.

Lorsqu'une mémoire FIFO émet une requête, elle est prête à recevoir ou fournir des données par le bus mémoire. L'acquittement d'une requête peut ne consister qu'à écrire ou lire des données dans la mémoire FIFO correspondante jusqu'à ce que la requête disparaisse, les lectures ou écritures étant effectuées par le bus mémoire MBUS à des adresses spécifiques aux mémoires FIFO. On décrit ultérieurement un mécanisme d'acquittement plus avantageux.

En outre, puisque les tâches que doit exécuter le contrôleur mémoire sont prédéfinies, les programmes correspondant à ces tâches sont stockés dans une mémoire d'instruction 54 non volatile (ROM), indépendante du bus mémoire MBUS. Le contenu du pointeur d'instruction IPi validé est fourni à l'entrée d'adresses de la mémoire ROM 54. L'unité de traitement 50 est reliée au bus mémoire MBUS pour gérer des transferts sur ce bus, mais est modifiée par rapport à une unité de traitement classique. Cette modification d'une unité de traitement classique peut être réalisée sans difficulté.

Une unité de traitement classique comprend un registre d'instruction et des registres de travail reliés à un même bus. Lorsqu'une instruction est chargée, elle est écrite dans le registre d'instruction et, lorsque cette instruction est exécutée, des opérations se produisent entre le bus et les registres de travail.

Selon l'invention, au lieu de relier le registre d'intruction au bus MBUS, ce registre d'instruction, non représenté, est relié à la sortie de la mémoire ROM. Avec une telle configuration, une instruction est exécutée pratiquement dès qu'elle est chargée dans l'unité de traitement. On économise ainsi autant de cycles de lecture qu'il y a d'instructions à exécuter, ce qui représente une économie notable de temps.

### Fonctionnement du contrôleur mémoire

A la mise sous tension, chaque pointeur d'instruction IPi (i=1, 2... n), qui est un registre, est initialisé à une valeur de départ IPi₀ correspondant à l'adresse de départ du programme associé. Ces adresses de départ correspondent à des données câblées présentes sur des entrées de précharge des registres des pointeurs d'instruction. Le niveau de priorité associé à chaque programme est déterminé par le décodeur de priorité qui affecte comme niveau de priorité à un programme, par exemple, le rang du pointeur d'instruction associé.

Une fois que le système est sous tension, il apparaît des requêtes sur les lignes RQ. Le décodeur de priorité valide le pointeur d'instruction IP associé à la requête la plus prioritaire. L'unité de traitement 50 charge l'instruction se trouvant à l'adresse indiquée par le pointeur d'instruction validé et exécute cette instruction. Lorsque l'instruction est exécutée, un circuit d'incrémentation 56 incrémente le pointeur d'instruction validé qui fournit alors l'adresse de l'instruction suivante à exécuter par l'unité de traitement. Le circuit d'incrémentation 56 n'agit que sur le pointeur validé, de manière que le contenu des autres pointeurs ne soit pas modifié. La représentation (+1) du circuit d'incrémentation 56 est symbolique ; les instructions à exécuter ne se trouvent pas forcément à des adresses suocessives, par exemple si les instructions sont de longueurs différentes ou que l'on exécute des instructions de saut ou d'appel de sous-programme. Dans un tel cas, le pointeur d'instruction validé est incrémenté ou décrémenté de la valeur adéquate, comme cela est connu dans les processeurs classiques.

Ci après, on désignera par le rang (i) d'un pointeur d'instruction IP le programme (ou tâche) et la requête associés.

Lorsqu'il apparaît une requête i plus prioritaire que celle du programme i-1 en cours d'exécution, le décodeur 52 valide le pointeur d'instruction IPi à la place du pointeur IPi-1 immédiatement après l'exécution d'un groupe d'instructions indivisible en cours du programme i-1. La requête i est alors acquittée par la ligne associée d'acquittement ACK. L'instruction indiquée par le nouveau pointeur validé IPi est chargée dans l'unité de traitement et exécutée sans perte de temps, c'est-à-dire que la nouvelle instruction est exécutée pratiquement à l'instant où aurait été exécutée l'instruction suivante du programme i-1.

Lorsque la requête prioritaire i est désactivée, le décodeur 52 valide le pointeur d'instruction correspondant à une nouvelle tâche de priorité maximale, cette tâche pouvant être une tâche qui a été suspendue par la tâche i ou une nouvelle tâche. Le programme associé est exécuté immédiatement à partir de son point de suspension, ou bien à partir de son début s'il s'agit d'un programme correspondant à une tâche qui n'a pas encore été commencée.

On remarquera, avec un tel système, que la commutation d'une tâche à l'autre se passe sans les temps morts qui auraient été nécessaires dans un système classique pour effectuer des sauvegardes et restaurations de contexte.

Les programmes associés aux tâches de transfert du système de traitement d'image sont prévus pour être exécutés en boucle infinie. Ainsi la dernière instruction d'un tel programme sera un saut jusqu'à la première instruction du programme. Ce saut peut être géré de manière classique par le circuit d'incrémentation 56. On verra ultérieurement une manière optimale, selon l'invention, de gérer des boucles.

Comme on l'a précédemment mentionné, on souhaite, malgré la survenue d'une requête plus prioritaire que celle de la tâche en cours, terminer l'exécution d'un groupe d'instructions en cours (transfert d'un paquet complet). Des instructions spécifiques permettent, dans un processeur classique, de désactiver et d'activer la prise en compte de requêtes d'interruption. Toutefois, dans un processeur selon l'invention, de telles instructions spécifiques ne conviennent pas, puisqu'on n'utilise pas le système classique d'interruption.

Pour résoudre ce problème, la présente invention prévoit de décomposer chaque instruction I en un préfixe I1 et en une commande I2. Le préfixe I1 est fourni à un décodeur de préfixe 58, et la commande I2, correspondant à une instruction classique, est fournie à l'unité de traitement 50. Le préfixe I1 indique que le programme en cours peut être suspendu ou non au moment de l'exécution de l'instruction associée à ce préfixe.

Le décodeur de préfixe 58 fournit au décodeur de priorité 52 un signal NEXTEN qui, si le préfixe est à une valeur spécifique, inhibe la validation d'un nouveau pointeur d'instruction même s'il apparaît une requête de priorité supérieure à celle du programme en cours.

### Optimisation du contrôleur mémoire

Le préfixe I1 des instructions est avantageusement prévu de sorte qu'il permet d'indiquer par un nombre de bits adéquat non seulement que le programme en cours peut être suspendu ou non à l'instruction courante, mais aussi que l'instruction en cours doit être exécutée un certain nombre de fois. Le préfixe I1 permet également d'indiquer que l'instruction en cours est ou non la dernière du programme (l'utilité de cette possibilité sera évoquée ultérieurement).

Le décodeur de préfixe 58 contient un décompteur de cycles d'instruction qui est initialisé à un nombre de cycles déterminé par le préfixe I1. Ce nombre peut être un nombre sélectionné parmi plusieurs nombres constants stockés dans le décodeur de préfixe ou bien un nombre N fourni par l'unité de traitement 50. Lorsqu'une telle instruction de boucle est exécutée, le décodeur de préfixe 58 inhibe le circuit d'incrémentation 56 durant le nombre de cycles d'instruction souhaité. Il en résulte que l'instruction chargée est exécutée le nombre de fois désiré.

Ceci permet d'économiser une instruction de saut par boucle à effectuer, ce qui représente une économie de temps notable si l'on doit exécuter une seule instruction plusieurs fois de suite. De telles instructions de boucle sont particulièrement utiles lorsque l'on transfère des données par paquets, ce qui est le cas dans le présent système.

Si le préfixe I1 indique que l'instruction en cours d'exécution est la dernière, le décodeur 58 fournit, après l'exécution de l'instruction, un signal INIT à l'ensemble des pointeurs d'instruction IP, qui provoque l'initialisation à l'adresse de début de programme du pointeur validé seulement.

Avec un tel système, le jeu d'instructions du processeur peut, dans certains cas, être restreint à un jeu ne comportant pas d'instructions de saut, ce qui permet de simplifier de façon notable le processeur, notamment le circuit d'incrémentation.

Dans le système de traitement d'image décrit, le traitement numérique des données est effectué par des circuits spécialisés. Le contrôleur mémoire ne sert qu'à effectuer des transferts sur le bus mémoire MBUS et à calculer les adresses des données dans la mémoire d'image 15.

Chaque mémoire FIFO fournit son contenu sur le bus mémoire MBUS ou reçoit les données présentes sur ce bus mémoire quand la mémoire FIFO reçoit un signal d'acquittement ACK. Les signaux ACK sont fournis par un circuit d'acquittement 59 qui reçoit un champ supplémentaire I3 de chaque instruction I fournie par la mémoire d'instruction 54. Avec cette configuration, les mémoires FIFO, et tout autre dispositif à lecture ou à écriture sur le bus mémoire MBUS, peuvent être directement sélectionnées par l'instruction en cours d'exécution (plus précisément par son champ I3), sans qu'il soit nécessaire d'émettre une adresse sur le bus mémoire. Ceci entraîne qu'une donnée lue dans la mémoire d'image peut être directement écrite dans un dispositif à écriture, et qu'une donnée lue dans un dispositif à lecture peut être directement écrite dans la mémoire d'image, sans qu'il soit nécessaire d'effectuer d'abord un cycle de lecture suivi d'un cycle d'écriture. Le circuit d'acquittement 59 sert, le cas échéant, à effectuer un décodage et à mettre en forme adéquate les acquittements (il est parfois nécessaire de retarder un signal d'acquittement, par exemple pour laisser le temps à la mémoire d'image de présenter ses données sur le bus avant d'indiquer à une mémoire FIFO de les lire).

Comme on l'a précédemment indiqué, une mémoire FIFO à écriture par le bus émet une requête lorsque son remplissage est inférieur à un nombre minimal, par exemple égal à la moitié de la capacité de la mémoire FIFO. La tâche associée à une mémoire FIFO à écriture consiste à transférer un paquet de données de la mémoire d'image vers la mémoire FIFO, la taille de ce paquet de données étant fixe et, par exemple, égale à la moitié de la capacité de la mémoire FIFO.

Une telle opération de transfert consiste à exécuter en boucle, de la manière précédemment décrite, une instruction de lecture de la mémoire d'image, le nombre de boucles étant déterminé par le préfixe I1 de l'instruction de lecture. A chaque exécution de l'instruction de lecture, la mémoire d'image présente une donnée sur le bus mémoire, qui est aussitôt transférée dans la mémoire FIFO.

Une mémoire FIFO à lecture par le bus émet une requête lorsque le nombre de données qu'elle contient dépasse un niveau maximal, par exemple égal à la moitié de la capacité de la mémoire FIFO. La tâche associée à la mémoire FIFO consiste à transférer le contenu de la mémoire FIFO dans la mémoire d'image par paquets de données. Chaque paquet contient un nombre fixe de données égal, par exemple, à la moitié de la capacité de la mémoire FIFO.

Une telle opération de transfert consiste à exécuter en boucle une instruction d'écriture de la mémoire d'image, le nombre de boucles étant déterminé par le préfixe I1 de l'instruction d'écriture. Le signal d'acquittement de la mémoire FIFO étant activé, la mémoire FIFO présente ses données sur le bus au rythme d'exécution des instructions d'écriture. Ainsi, chaque donnée présentée par la mémoire FIFO sur le bus, est aussitôt écrite dans la mémoire d'image.

Pour connaître à partir de quel emplacement dans la mémoire d'image, il faut transférer des paquets de données, on pourra, par exemple, mettre à jour un pointeur de donnée stocké dans la mémoire d'image. L'unité de traitement comprend un registre d'adresses AR contenant l'adresse à laquelle est effectuée une opération de lecture ou écriture. Le début d'un programme de transfert d'un paquet de données comprend une instruction qui vient écrire dans ce registre d'adresses AR le contenu du pointeur de donnée. La suite du programme comprend, par exemple, des instructions de modification de manière adéquate du contenu du registre d'adresses à chaque instruction de lecture ou écriture (instruction de transfert). Cette modification adéquate peut consister en une incrémentation (ce qui revient à écrire ou lire des données à des adresses successives dans la mémoire d'image) ou bien en un calcul plus complexe (par exemple récursif pour extraire une ligne d'image à afficher d'une succession de macroblocs).

Toutefois, l'exécution d'instructions de modification du registre d'adresses AR à chaque exécution d'une instruction de transfert nécessite que l'on insère des instructions, avant ou après l'instruction de transfert, qui sont exécutées dans la même boucle que l'instruction de transfert. Ceci est incompatible avec l'utilisation avantageuse du préfixe I1 permettant d'indiquer que la seule instruction courante doit être exécutée en boucle.

Pour remédier à cet inconvénient et pour en outre accroître davantage la rapidité du système, l'unité de traitement comprend une unité de calcul d'adresses 50-1 qui met en oeuvre, de manière câblée, un certain nombre de fonctions prédéterminées de calcul d'adresses. Chaque fonction de calcul de l'unité de calcul est sélectionnée par un champ supplémentaire I4 de l'instruction I en cours d'exécution (ce champ I4 pouvant éventuellement être le champ I3). Ainsi, on sélectionne pour chaque instruction à exécuter une fonction spécifique de calcul d'adresses. Chaque fonction câblée est prévue pour modifier l'état du registre AR en synchronisme avec les cycles d'instruction.

Cette configuration permet d'exécuter en boucle une seule instruction de lecture ou écriture, la lecture ou écriture ayant lieu à l'adresse contenue dans le registre AR qui est, à chaque boucle, automatiquement mise à jour par la fonction câblée associée à l'instruction.

Comme cela a été décrit, plutôt que de stocker les vecteurs de compensation de mouvement et les pointeurs d'image dans une mémoire FIFO reliée au bus mémoire MBUS, ces paramètres sont empilés dans des registres 50-2 formant partie de l'unité de calcul 50-1. A chaque impulsion de synchronisation d'image ISYNC, le contenu des registres 50-2 se décale de manière que l'unité de calcul 50-1 prend en compte un nouveau jeu de pointeurs d'image et, en outre, les registres d'adresse AR sont initialisés. A chaque impulsion de synchronisation de macrobloc MBS le contenu des registres se décale de manière que l'unité de calcul prend en compte un nouveau jeu de vecteurs.

Ci-après, on considère un programme de transfert d'un paquet de n données entre une mémoire FIFO et la mémoire d'image, ce programme correspondant à la tâche initiée par une requête fournie par la mémoire FIFO. La mémoire FIFO considérée est supposée désactiver sa requête une fois qu'elle a reçu n+1 données.

Un tel programme se résume aux instructions successives suivantes :
- une instruction pour charger dans le registre AR la dernière adresse utilisée lors de la dernière exécution de la tâche courante (cette adresse étant par exemple stockée dans la mémoire d'image à un emplacement réservé à la tâche). Le préfixe I1 de cette instruction indique que la tâche ne doit pas être suspendue (par une tâche plus prioritaire). Les champs I3 et I4 contiennent des valeurs inactives.
- Une instruction de transfert, dont le préfixe I1 indique que cette instruction doit être exécutée n fois et que la tâche ne doit pas être suspendue. Le champ I3 sélectionne la mémoire FIFO à utiliser, et le champ I4 sélectionne la fonction câblée de calcul d'adresses à utiliser.
- Une instruction pour sauvegarder le contenu du registre AR, dont le préfixe I1 indique que l'exécution du programme doit reprendre à sa première instruction et que la tâche peut être suspendue. Les champs I3 et I4 contiennent des valeurs inactives.

Une telle tâche ne peut céder la main à une tâche plus prioritaire qu'à la dernière instruction du programme (qui est la seule à autoriser la suspension de la tâche), c'est-à-dire lorsque le paquet entier a été transféré. Si le nombre de données n d'un paquet est élevé, il convient de pouvoir céder la main plus souvent à une tâche plus prioritaire.

Pour cela, une première solution consiste à diviser le paquet de n données en p sous-paquets de n₁ .. nᵢ .. nₚ données, respectivement, et prévoir un programme de transfert comprenant p sous-programmes successifs de transfert de n₁ .. nᵢ .. nₚ données, respectivement. Ce cas est par exemple celui du transfert d'un macrobloc en trois sous-blocs. Chaque sous-programme comprend les trois instructions susmentionnées, sauf que l'instruction de transfert est exécutée nᵢ fois au lieu de n, et que seulement l'instruction de sauvegarde du dernier sous-programme indique que le programme doit reprendre à sa première instruction. Ceci permet de céder la main à une tâche plus prioritaire à la fin de chaque sous-programme, c'est-à-dire après un temps d'attente relativement faible au plus égal au transfert de nᵢ données (au lieu de n données). Ceci permet également de sélectionner, à chaque sous-programme, une fonction de calcul d'adresses distincte, et donc de décomposer une fonction de calcul complexe en des sous fonctions simples éventuellement utilisables pour d'autres tâches.

Toutefois, cette solution exige, entre deux transferts de nᵢ données, d'exécuter une instruction de sauvegarde et une instruction de mise à jour du registre AR, ce qui ralentit le processus.

Une deuxième solution, évitant cet inconvénient, consiste à prévoir dans l'unité de traitement autant de registres d'adresses AR qu'il y a de fonctions de calcul câblées. Ainsi, chaque fonction de calcul effectue des opérations sur son propre registre d'adresses et, si la fonction est suspendue (parce que la tâche associée est suspendue), elle retrouve, dans son registre, l'adresse à partir de laquelle elle doit continuer une fois que la fonction est réactivée. Il devient inutile d'effectuer des mises à jour ou des sauvegardes de ces registres d'adresses. Il en résulte qu'un programme de transfert se réduit à une éventuelle première instruction de mise à jour d'un registre d'adresses, une éventuelle dernière instruction de sauvegarde, et entre, une succession d'instructions de transfert à exécuter chacune en boucle, le préfixe I1 de chaque instruction de transfert indiquant le nombre de boucles.

Il ne faut pas que le programme puisse être suspendu au milieu de l'exécution d'une instruction en boucle. Pour cela, le champ I1 de l'instruction exécutée en boucle indique par un bit actif que le programme ne peut être suspendu. Ce bit actif est pris en compte par le décodeur de préfixe qui n'autorise alors pas l'activation du signal NEXTEN (servant à indiquer que le programme en cours peut être suspendu).

### Utilisation d'une mémoire dynamique en tant que mémoire d'image

La mémoire d'image la plus couramment utilisée est une mémoire dynamique (DRAM). Les mémoires DRAM présentent l'avantage d'avoir un faible encombrement, un faible coût, et une grande capacité de stockage. Toutefois, leur accès doit se faire en deux temps. En effet, une mémoire DRAM est divisée en plusieurs zones appelées pages et l'on doit, avant de lire ou écrire dans une mémoire DRAM, d'abord sélectionner une page à l'aide d'un cycle d'adressage particulier, puis sélectionner une case dans cette page à l'aide d'un cycle de lecture ou écriture normal. Bien entendu, une fois qu'une page est sélectionnée, on accède aux cases de cette page par seulement des cycles de lecture ou écriture normaux.

Pour optimiser l'utilisation d'une mémoire DRAM, on stocke les blocs de luminance des macroblocs, dans une première page et les blocs de chrominance dans une autre page. On sépare ainsi les blocs de chrominance et de luminance pour que l'on puisse faire rentrer un nombre entier de blocs dans une page de la mémoire DRAM. Des fonctions adéquates de l'unité de traitement gèrent la séparation et le regroupement des blocs lors des transferts de macroblocs.

Un macrobloc prédicteur MBp, étant donné qu'il est déterminé par un vecteur de compensation de mouvement quelconque, peut se trouver à cheval sur plusieurs pages de la mémoire DRAM. La lecture du prédicteur est alors plus complexe. Dans un tel cas, la fonction de calcul sélectionnée fournit un nombre N au décodeur de préfixe, ce nombre N étant calculé à partir du vecteur. Le nombre N indique, par exemple, la longueur en pixels des colonnes du prédicteur à l'intérieur d'une page supérieure contenant partiellement le prédicteur. La lecture du prédicteur consiste à exécuter, pour chaque colonne de pixels, d'abord N fois une instruction de lecture pour lire les pixels de la première partie de la colonne contenue dans une page supérieure, puis H-N fois pour lire le reste de la colonne dans une page inférieure (H étant la hauteur d'une colonne en pixels), un changement de page étant opéré entre les deux lectures.

Avec cette configuration, un prédicteur est lu dans le bon ordre, ce qui évite la nécessité de prévoir une fonction de calcul d'adresses complexe pour remettre dans le bon ordre les pixels du prédicteur et une mémoire tampon pour stocker temporairement le prédicteur avant sa réorganisation. Dans la demande de brevet européen 0 503 956 citée, on lit d'abord tous les pixels de la partie d'un prédicteur contenue dans une page avant de passer à la lecture d'une partie contenue dans une autre page, ceci pour minimiser le nombre de changements de page au coût d'une complexité plus élevée. Selon l'invention, on peut se permettre d'effectuer un plus grand nombre de changements de page car le système est suffisamment rapide. En outre, cette augmentation du nombre de changements de page ne représente, en pratique avec un bus mémoire de 64 bits de données, que 4 cycles d'horloge sur une centaine.

### Décodeur MPEG associé à un microprocesseur

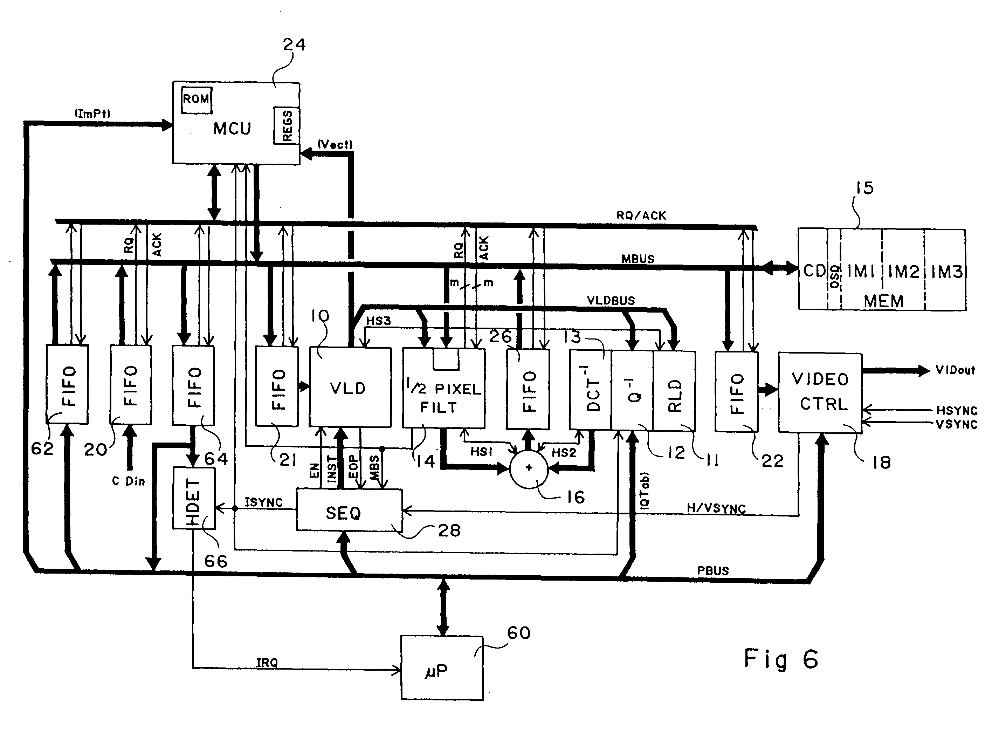

La figure 6 représente un mode de réalisation de décodeur MPEG selon l'invention plus particulièrement adapté à exploiter des données privées fournies par certains en-têtes.

Un décodeur MPEG est le plus souvent utilisé dans un appareil, tel qu'un téléviseur ou un microordinateur, comprenant un microprocesseur.

A la figure 6, on retrouve des mêmes éléments qu'à la figure 3, désignés par des mêmes références. Ce qui différencie ce système de celui de la figure 3 est la présence d'un bus de processeur PBUS géré par un microprocesseur 60. Le microprocesseur est destiné à reprendre certaines tâches du circuit VLD 10 qui sont celles de fournir les paramètres de configuration au contrôleur d'affichage 18, de fournir les tables de quantification QTab au circuit de quantification inverse 12, de fournir les pointeurs d'image ImPt au contrôleur mémoire 24, et de fournir les paramètres de décodage ("l'instruction") nécessaires au circuit VLD qui sont les paramètres de type d'image et des informations de décodage des vecteurs de compensation de mouvement.

En outre, le système comprend deux mémoires FIFO supplémentaires, l'une, 62, servant à écrire dans la mémoire 15 des données provenant du bus PBUS et l'autre, 64, servant à écrire sur le bus PBUS des données provenant de la mémoire 15. Le contenu de la mémoire FIFO 64 est en outre exploité par un détecteur d'en-tête 66 qui reçoit le signal de synchronisation ISYNC et fournit une requête d'interruption IRQ au microprocesseur 60.

Dans la mémoire FIFO 64, on écrit les données comprimées stockées dans la mémoire 15. Le détecteur d'en-tête 66 est prévu pour détecter les en-têtes de séquence et d'image et interrompt le microprocesseur 60 lorsque l'un de ces en-têtes est détecté. La tâche du microprocesseur 60 consiste alors à lire les en-têtes dans la mémoire FIFO 64, extraire les paramètres de ces en-têtes, fournir les tables de quantification au circuit 12, les paramètres de configuration au contrôleur d'affichage 18, l'instruction du circuit VLD au séquenceur 28 et finalement calculer les quatre pointeurs d'image susmentionnés (RP, FP, BP, DP) et les fournir au contrôleur mémoire 24.

En outre, le microprocesseur extrait des en-têtes des données d'affichage sur écran et des données privées. Les données d'affichage sur écran sont fournies à la mémoire FIFO 62 et transmis par le bus MBUS dans une zone OSD de la mémoire 15. Les données privées sont mémorisées dans la mémoire (non représentée) associée au microprocesseur 60 et exploitées hors du système de décompression.

Avec cette configuration, les tâches à effectuer par le circuit VLD sont allégées, ce qui permet d'aocroître la rapidité de ce dernier et d'en réduire la complexité. Bien entendu, le circuit VLD détecte toujours les en-têtes de séquence et d'image puisqu'il doit reconnaître des en-têtes, mais il ne les exploite pas.

Les tâches de transfert de la mémoire FIFO 62 vers la mémoire 15 et de transfert de la mémoire 15 vers la mémoire FIFO 64 sont des tâches supplémentaires effectuées par le contrôleur mémoire 24, ces tâches étant mises en oeuvre par le système de requête/acquittement décrit en relation avec les autres mémoires FIFO. La tâche associée à la mémoire FIFO 62 aura, par exemple, une priorité comprise entre celles des mémoires FIFO 20 et 22, et la tâche associée à la mémoire FIFO 64 aura, par exemple, une priorité comprise entre celles des mémoires FIFO 20 et 21.

Le séquenceur 28 dans la figure 6 a un rôle supplémentaire par rapport à celui de la figure 3 qui est d'empiler les instructions du circuit VLD dans des registres et de les fournir au circuit VLD en synchronisme avec le signal ISYNC.

Le microprocesseur 60 allège le décodeur MPEG de certaines tâches qui auraient été complexes à mettre en oeuvre par le décodeur lui-même, sans toutefois réduire les possibilités du microprocesseur. En effet, pour un processeur de type INTEL 486, par exemple, ces tâches ne correspondent qu'à environ 1 % des possibilités du microprocesseur et elles peuvent être traitées par un sous-programme d'interruption de priorité minimale.

### Traitement d'images haute définition

Un système de décompression, ou décodeur MPEG, selon la présente invention est capable de traiter seul des images de télévision de définition standard (par exemple de 720x480 pixels). Pour traiter des images haute définition, la puissance de calcul doit être multipliée. Par exemple, pour traiter des images haute définition de 1440x960 pixels, il est nécessaire de faire fonctionner en parallèle au moins quatre décodeurs MPEG.

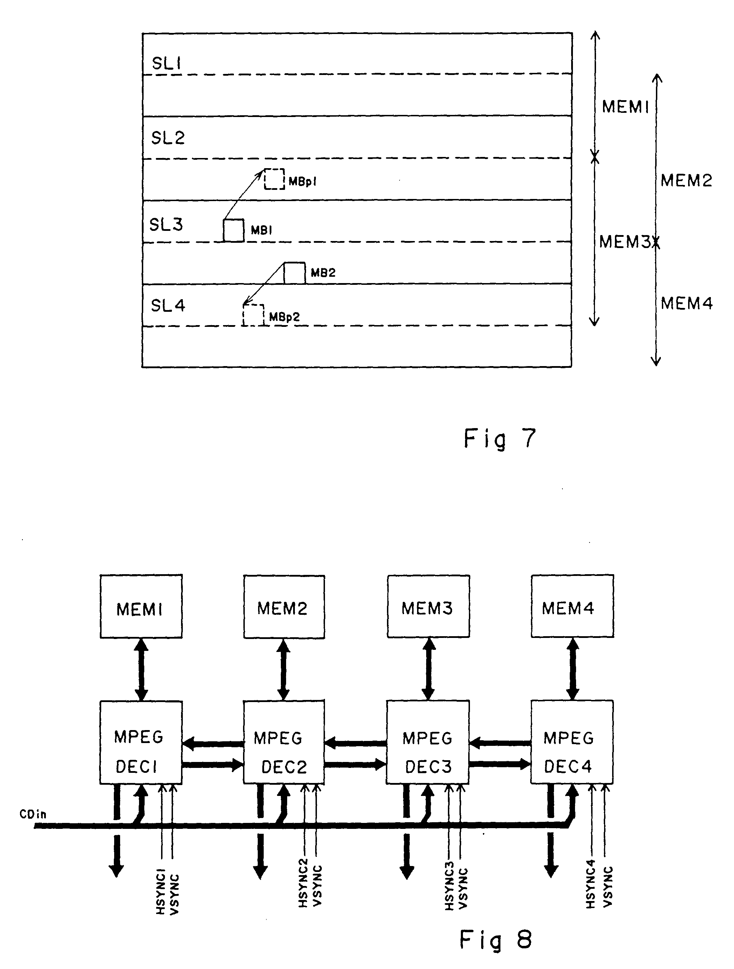

La figure 7 représente une image haute définition découpée en quatre tranches SL1 à SL4 dont chacune est traitée par un décodeur MPEG respectif.

La figure 8 représente quatre décodeurs MPEG connectés pour traiter les quatre tranches de l'image haute définition. L'entrée de chaque décodeur MPEG est reliée au bus de données comprimées CDin et chacun des décodeurs travaille avec une mémoire d'image respective. Le contrôleur d'affichage de chaque décodeur reçoit les signaux de synchronisation d'affichage correspondant seulement à la tranche associée et les données fournies par ces contrôleurs d'affichage sont multiplexées. Ainsi, le contrôleur d'affichage d'un décodeur reçoit des salves d'impulsions de synchronisation horizontale HSYNC à chaque fois que l'on affiche la tranche associée et une impulsion de synchronisation verticale VSYNC indiquant les transitions d'une image à l'autre.

Toutefois, il ne suffit pas d'ainsi mettre en parallèle plusieurs décodeurs. En effet, si l'on se réfère à la figure 7, pour reconstruire un macrobloc MB1 de la partie supérieure de la tranche SL3, par exemple, il est probable qu'il faille utiliser un macrobloc prédicteur MBp1 se trouvant dans la partie inférieure de la tranche SL2. De même, pour reconstruire un macrobloc MB2 à la partie inférieure de la tranche SL3, il est probable qu'il faille utiliser un macrobloc prédicteur MBp2 de la partie supérieure de la tranche SL4. En d'autres termes, il faudrait que le décodeur associé à la tranche SL3 puisse accéder aux mémoires des décodeurs associés aux tranches SL2 et SL4.

La présente invention propose une modification simple de décodeur MPEG servant au décodage d'images de définition standard qui permette d'associer en parallèle un nombre quelconque de tels décodeurs MPEG pour traiter des images de définition quelconque.

Pour cela, on prévoit d'augmenter la capacité des mémoires associées aux décodeurs de manière que chacune puisse contenir la tranche associée ainsi que des marges correspondant aux zones limitrophes des tranches adjacentes. La hauteur des zones limitrophes est déterminée par l'amplitude verticale maximale des vecteurs de compensation de mouvement. On suppose ci-après que cette amplitude correspond à la hauteur d'une demi-tranche d'image. Ainsi, une mémoire associée à une tranche a une capacité propre à contenir la tranche associée, la moitié basse de la tranche adjacente supérieure et la moitié haute de la tranche adjacente inférieure. Bien entendu, les capacités des mémoires des décodeurs extrêmes sont propres à contenir chacune la tranche associée et une seule demi-tranche.

Avec cette configuration, tout macrobloc prédicteur pour reconstruire un macrobloc d'une tranche est accessible par le contrôleur mémoire du décodeur associé à cette tranche.

Il est par ailleurs prévu entre chaque décodeur un mécanisme d'échange permettant à un décodeur de fournir les données de sa tranche à sa mémoire et de fournir ces mêmes données aux mémoires des décodeurs adjacents.

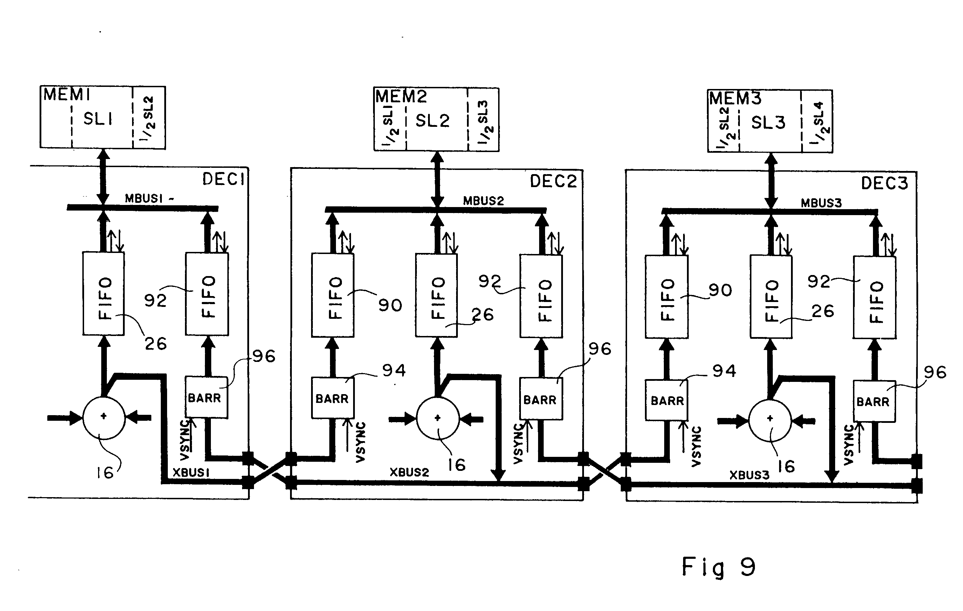

La figure 9 représente partiellement la structure interne de deux décodeurs selon l'invention mis en parallèle. Dans chaque décodeur, on a représenté l'additionneur 16 et la mémoire FIFO 26 servant à fournir à la mémoire du décodeur les macroblocs reconstruits. L'additionneur 16, en même temps qu'il fournit des données à la mémoire FIFO 26 à stocker dans la mémoire du décodeur, fournit les données sur un bus d'échange XBUS relié aux décodeurs adjacents. Chaque décodeur comprend en outre deux mémoires FIFO 90 et 92 reliées au bus mémoire MBUS du décodeur et recevant respectivement les données des bus d'échange des deux décodeurs adjacents. Comme pour les autres mémoires FIFO du décodeur, les données des mémoires FIFO 90 et 92 sont transférées vers la mémoire du décodeur à l'aide d'un mécanisme de requête/acquittement mis en oeuvre par le contrôleur mémoire du décodeur. La tâche associée à la mémoire FIFO 90 est de transférer les données de cette mémoire FIFO vers une zone mémoire ½SL de tranche limitrophe supérieure et la tâche associée à la mémoire FIFO 92 consiste à transférer les données de cette mémoire FIFO vers une zone mémoire de tranche limitrophe inférieure ½SL.

Etant donné que l'on fournit toutes les données d'une tranche SL sur un bus d'échange XBUS, les mémoires FIFO 90 et 92 sont précédées d'un circuit de barrage respectif 94 et 96 permettant de filtrer les données de la demi-tranche correspondante. Pour cela, un circuit de barrage 94 comprend un compteur de données qui autorise le transfert des données vers la mémoire FIFO 90 à partir du moment où le nombre de données comptées atteint le nombre de données d'une demi-tranche. Un circuit de barrage 96 comprend un compteur de données qui autorise le transfert des données vers la mémoire FIFO 92 jusqu'au moment où le nombre de données comptées atteint le nombre de données d'une demi-tranche. Les compteurs des circuits de barrage 94 et 96 sont initialisés entre l'affichage de deux tranches, par exemple par le signal de synchronisation verticale VSYNC.

Un système de traitement d'images haute définition selon l'invention nécessite une augmentation de mémoire de 75 % par rapport à quatre décodeurs MPEG individuels. Mais le prix de cette augmentation est compensé par la faible complexité du système.

## Revendications

1. Système de traitement de données d'image comprimées arrivant par paquets correspondant à des blocs d'image, ces paquets de données étant séparés par des en-têtes contenant des paramètres de décodage de ces paquets, le système comprenant plusieurs éléments de traitement utilisant lesdits paramètres, et un bus mémoire (MBUS) géré par un contrôleur mémoire (24) pour échanger lesdites données entre les éléments de traitement à des cadences adaptées aux vitesses de traitement de ces éléments et pour stocker lesdits données dans une mémoire d'image (15) en attente de traitement ou afin de les réutiliser,
**caractérisé en ce que** ce système de traitement de données d'image comprimées comprend un circuit pipeline (11, 12, 13) comprenant plusieurs de ces éléments de traitement connectés pour traiter lesdits paquets de données en série, et un bus de paramètres (VLDBUS) pour fournir lesdits paquets à traiter au circuit pipeline ainsi que les paramètres de décodage à des éléments du système, ce bus de paramètres étant géré par un élément de traitement maître (VLD, 10) qui reçoit les données comprimées du bus mémoire, qui en extrait les paquets et les paramètres de décodage grâce à un détecteur d'entête.

2. Système selon la revendication 1, **caractérisé en ce que** chaque paquet de données d'image comprimées est précédé d'un en-tête de bloc et **en ce que** les paquets sont rassemblés en groupes successifs, chaque groupe de paquets étant précédé d'un en-tête de groupe contenant des paramètres de décodage des paquets du groupe ainsi qu'éventuellement des informations privées et d'affichage sur écran, et **en ce qu'**il comprend :
- un bus de processeur (PBUS) géré par un microprocesseur (60) pour fournir les paramètres de décodage de groupe et les informations privées et d'affichage aux éléments du système qui les requièrent ;
- une mémoire tampon (64) accessible par le bus de processeur, recevant les données d'image comprimées par le bus mémoire ; et
- un détecteur (66) d'en-tête de groupe coopérant avec cette mémoire tampon pour générer une interruption du microprocesseur.

3. Système selon la revendication 1 ou 2, **caractérisé en ce qu'**un transfert de données entre deux éléments reliés au bus mémoire (MBUS) correspond à une tâche spécifique qui doit être initiée ou continuée lorque l'un des deux éléments émet une requête pour fournir ou recevoir des données, toutes les tâches possibles étant des tâches concurrentes mises en oeuvre par le contrôleur mémoire (24) par une gestion de priorité des requêtes.

4. Système selon la revendication 3, **caractérisé en ce que** des éléments devant échanger des données avec la mémoire d'image (15) sont reliés au bus mémoire (MBUS) par des mémoires tampon respectives à écriture ou à lecture par le bus mémoire,
une mémoire tampon à écriture étant vidée par l'élément associé et émettant une requête pour recevoir des données par le bus mémoire quand son contenu atteint une limite inférieure, et
une mémoire tampon à lecture étant remplie par l'élément associé et émettant une requête pour fournir des données sur le bus mémoire quand son contenu atteint une limite supérieure.

5. Système selon la revendication 4, **caractérisé en ce qu'**il comprend
- un décodeur de mots de longueur variable (VLD) formant ledit élément de traitement maître ;
- un décodeur de chaînes de zéros (RLD) formant un premier élément du circuit pipeline et recevant par le bus de paramètres (VLDBUS) les paquets traités par le décodeur de mots de longueur variable ;
- un circuit de quantification inverse (Q⁻¹) formant un deuxième élément du circuit pipeline et recevant par le bus de paramètres des coefficients de quantification ;
- un circuit de transformée cosinus inverse (DCT⁻¹) formant un troisième élément du circuit pipeline ;
- le contrôleur mémoire (24) recevant par le bus de paramètres des vecteurs de compensation de mouvement ;
- un filtre (14) recevant par le bus de paramètres un paramètre de type de bloc d'image, ce filtre émettant des requêtes distinctes, selon le paramètre de type de bloc, pour recevoir des données correspondantes fournies par le bus mémoire en fonction des vecteurs que le contrôleur mémoire reçoit ; et
- un additionneur (16) pour fournir sur le bus mémoire la somme des sorties du filtre et du circuit de transformée cosinus.

6. Système selon la revendication 5, **caractérisé en ce que** le détecteur (66) d'en-tête de groupe est prévu pour générer une interruption du microprocesseur (60) lorsque la mémoire tampon associée (64) contient un en-tête de séquence d'images ou un en-tête d'image, le microprocesseur étant prévu pour répondre à cette interruption en lisant dans la mémoire tampon associée au détecteur d'en-tête de groupe des tables de quantification qu'il fournit au circuit de quantification inverse (Q⁻¹), des informations de type d'image et d'amplitude de vecteur de compensation de mouvement qu'il fournit au décodeur de mots de longueur variable (VLD), et des informations de réglage d'affichage qu'il fournit à un contrôleur d'affichage (18) qui reçoit des données décodées par le bus mémoire.

7. Système selon la revendication 3, **caractérisé en ce que** le contrôleur mémoire comprend :
- une mémoire d'instruction (54) indépendante dudit bus mémoire (MBUS), dans laquelle sont stockées les instructions de programmes correspondant respectivement aux tâches de transfert sur le bus mémoire ;
- une unité de traitement d'instructions (IPROC) couplée à la mémoire d'instruction pour recevoir de celle-ci les instructions successives à exécuter et connectée pour agir en fonction de ces instructions sur le bus mémoire (MBUS) ;
- une pluralité de pointeurs d'instruction (IP) associés respectivement aux tâches possibles et contenant chacun l'adresse de l'instruction courante à exécuter de la tâche associée, un seul de ces pointeurs étant susceptible d'être validé à la fois pour fournir son contenu en tant qu'adresse d'instruction à la mémoire d'instruction ;
- un décodeur de niveau de priorité (52) affectant un niveau de priorité prédéterminé à chaque requête (RQ) et validant le pointeur d'instruction associé à la requête active de niveau de priorité le plus élevé ; et
- des moyens (56) pour incrémenter le contenu du pointeur d'instruction validé et pour le réinitialiser à l'adresse de début du programme associé lorsque son contenu atteint l'adresse de fin du programme associé.

8. Système selon la revendication 7, **caractérisé en ce que** chaque instruction (I) comprend un champ de commande (I2) fourni à l'unité de traitement d'instructions et un champ de nature d'instruction (I1) fourni à un décodeur de préfixe (58) comprenant :
- des moyens (NEXTEN) pour autoriser une nouvelle validation de pointeur d'instruction par le décodeur de niveau de priorité si le champ de nature de l'instruction courante est à une première valeur prédéterminée, et
- des moyens (INIT) pour initialiser le contenu du pointeur d'instruction validé à l'adresse de début du programme en cours si le champ de nature de l'instruction courante est à une deuxième valeur prédéterminée.

9. Système selon la revendication 8, **caractérisé en ce que** le décodeur de préfixe (58) comprend des moyens (INH) pour inhiber l'incrémentation du pointeur d'instruction validé si le champ de nature est à une troisième valeur prédéterminée, de manière que l'instruction courante soit exécutée plusieurs fois de suite, le nombre d'exécutions étant déterminé par cette troisième valeur.

10. Système selon la revendication 7, **caractérisé en ce que** chaque instruction (I) comprend un champ de commande (I2) fourni à l'unité de traitement d'instructions et un champ d'acquittement (I3) fourni à des moyens (59) pour, lorsque l'instruction est en cours d'exécution, activer au moins une mémoire tampon reliée au bus mémoire.

11. Système selon la revendication 7, **caractérisé en ce que** l'unité de traitement comprend une pluralité de fonctions câblées (50-1) de calcul d'adresses, chaque fonction étant sélectionnée par un champ (I4) d'une instruction de lecture ou écriture en cours d'exécution.

12. Système selon la revendication 11, **caractérisé en ce que** à chaque fonction câblée est associé un registre d'adresses (AR) relié au bus mémoire, la fonction câblée étant prévue pour, à chaque exécution d'une instruction dans l'unité de traitement (ALU), modifier de manière adéquate le contenu de son registre d'adresses.

## Patentansprüche

1. System zur Verarbeitung komprimierter Bilddaten, die in Form von Bildblöcken entsprechenden Paketen ankommen, wobei diese Datenpakete durch Köpfe bzw. Vorsätze getrennt sind, welche Parameter für die Dekodierung dieser Pakete enthalten, wobei das System mehrere diese Parameter verwendende Verarbeitungselemente umfaßt und einen Speicherbus (MBUS), der durch eine Speichersteuerung verwaltet wird, um die genannten Daten zwischen den Verarbeitungselementen mit an die Verarbeitungsgeschwindigkeit dieser Elemente angepaßten Taktrhythmen auszutauschen und die genannten Daten in einem Bildspeicher (15) in Erwartung ihrer Verarbeitung oder zum Zwecke ihrer Weiterverwendung zu speichern,
**dadurch gekennzeichnet, daß** dieses System zur Verarbeitung komprimierter Bilddaten eine Pipeline-Schaltung (11, 12, 13), welche mehrere dieser Verarbeitungselemente in Schaltung zur seriellen Verarbeitung der genannten Datenpakete umfaßt, sowie einen Parameter-Bus (VLDBUS) aufweist, welcher die genannten zu verarbeitenden Pakete der Pipeline-Schaltung und die Decodierungs-Parameter Elementen des Systems zuführt, wobei dieser Parameterbus durch ein Haupt- bzw. Master-Verarbeitungselement verwaltet wird, welches die komprimierten Daten von dem Speicherbus zugeführt erhält und hieraus die Pakete und die Dekodierungsparameter mit Hilfe eines Kopf- bzw. Vorsatzdetektors extrahiert.

2. System nach Anspruch 1, **dadurch gekennzeichnet, daß** jedem Paket komprimierter Bilddaten jeweils ein Block-Kopf bzw. -Vorsatz voraufgeht und daß die Pakete in aufeinandergenden Gruppen zusammengefaßt sind, wobei jeder Gruppe von Paketen jeweils ein Gruppen-Kopf bzw. -Vorsatz voraufgeht, welcher Dekodierungsparameter der Gruppenpakete sowie gegebenenfalls private Informationen und Informationen zur Anzeige am Bildschirm enthält, und daß das System umfaßt:
- einen durch einen Mikroprozessor (60) gesteuerten Prozessor-Bus (PBUS), um die Gruppen-Dekodierungs-Parameter und die privaten Informationen und Bildschirm-Anzeige-Informationen den Elementen des Systems zuzuführen, welche sie benötigen;
- einen mittels dem Prozessorbus zugänglichen Pufferspeicher (64), welchem die komprimierten Bilddaten durch den Speicherbus zugeführt werden;
- einen Gruppenkopf-Detektor (66), der mit diesem Pufferspeicher zur Erzeugung eines Mikroprozessor-Interrupts zusammenwirkt.

3. System nach Anspruch 1 oder 2, **dadurch gekennzeichnet, daß** eine Datenübertragung zwischen zwei mit dem Speicherbus (MBUS) verbundenen Elementen einer spezifischen Aufgabe bzw. Task entspricht, die begonnen oder fortgesetzt werden muß, wenn eines der beiden Elemente eine Anforderung auf Abgabe oder Zufuhr der Daten äußert, wobei sämtliche möglichen Aufgaben bzw. Tasks konkurrierende Aufgaben darstellen, die von der Speichersteuerung (24) mittels eines Aufgaben-Prioritäten-Managements ausgeführt werden.

4. System nach Anspruch 3, **dadurch gekennzeichnet, daß** die Elemente, die mit dem Bildspeicher (15) Daten austauschen müssen, mit dem Speicherbus (MBUS) über entsprechende Schreiboder Lese-Pufferspeicher verbunden sind, zum Schreiben oder Lesen über den Speicherbus,
wobei ein Schreib-Pufferspeicher durch das zugeordnete Element geleert wird und eine Anforderung zum Empfang von Daten über den Speicherbus aussendet, sobald sein Inhalt eine untere Grenze erreicht, und
wobei ein Lese-Pufferspeicher durch das zugeordnete Element aufgefüllt wird und eine Anforderung zur Abgabe von Daten über den Speicherbus aussendet, sobald sein Inhalt einen oberen Grenzwert erreicht.

5. System nach Anspruch 4, **dadurch gekennzeichnet, daß** das System umfaßt:
- einen Dekoder von Worten variabler Länge (VLD), der das genannte Haupt- bzw. Master-Verarbeitungselement bildet;
- einen Nullketten-Dekoder bzw. Run-Level-Dekoder (RLD), welcher ein erstes Element der Pipeline-Schaltung bildet und von dem Parameter-Bus (VLDBUS) die durch den variablen Wortlängendecoder verarbeiteten Pakete zugeführt erhält;
- eine Invers-Quantisierungs-Schaltung (Q⁻¹), welche ein zweites Element der Pipeline-Schaltung bildet und über den Parameter-Bus Quantisierungs-Koeffizienten zugeführt erhält;
- eine Schaltung zur inversen Cosinus-Transformation (DCT⁻¹), welche ein drittes Element der Pipeline-Schaltung darstellt;
- die Speichersteuerung (24), welche durch den Parameter-Bus Vektoren zur Bewegungskompensation zugeführt erhält;
- ein Filter (14), welches von dem Parameter-Bus einen Parameter vom Bildblock-Typ zugeführt erhält, wobei das Filter je nach dem Blocktyp-Parameter distinkte Anforderungen aussendet, um entsprechende von dem Speicherbus gelieferte Daten zugeführt zu erhalten, in Abhängigkeit von den Vektoren, die die Speichersteuerung zugeführt erhält; sowie
- eine Addiervorrichtung (16), welche an den Speicher-Bus die Summe der Ausgangsgrößen des Filters und der Cosinus-Transformations-Schaltung zuführt.

6. System nach Anspruch 5, **dadurch gekennzeichnet, daß** der Gruppen-Kopf-Detektor (66) zur Erzeugung einer Unterbrechnung des Mikrcprozessors (60) vorgesehen ist, wenn der zugeordnete Pufferspeicher (64) einen Bildsequenz-Kopf oder einen Bild-Kopf enthält, wobei der Mikroprozessor vorgesehen ist, auf diese Unterbrechung damit anzusprechen, daß er in dem dem Gruppen-Kopf-Detektor zugeordneten Pufferspeicher Quantisierungstabellen liest, die er der Invers-Quantisierungs-Schaltung (Q⁻¹) zuführt, des weiteren Informationen über den Bildtyp und die Amplitude des Vektors der Bewegungskompensation, die er dem Dekoder mit variabler Wortlänge (VLD) zuführt, sowie Informationen betreffend die Schirmanzeige-Regelung, welche er einer Wiedergabe-Anzeige-Steuerung (18) zuführt, die dekodierte Daten von dem Speicher-Bus zugeführt erhält.

7. System nach Anspruch 3, **dadurch gekennzeichnet, daß** die Speicher-Steuerung umfaßt:
- einen von dem genannten Speicher-Bus (MBUS) unabhängigen Befehlsspeicher (54), in welchem die jeweils den Aufgaben bzw. Tasks der Übertragung bzw. Überführung auf dem Speicherbus entsprechenden Programmbefehle gespeichert sind;
- eine mit dem Befehlsspeicher gekoppelte Befehlsverarbeitungs-Einheit (IPROC), welche von dem Befehlsspeicher die aufeinanderfolgenden auszuführenden Befehle erhält und so angeschlossen und geschaltet ist, daß sie in Abhängigkeit von diesen Befehlen auf den Speicherbus (MBUS) einwirkt;
- mehrere Befehlszeiger (IP), die jeweils den möglichen Aufgaben zugeordnet sind und deren jeder jeweils die Adresse des laufenden durchzuführenden Befehls der zugeordneten Aufgabe enthält, wobei in jedem Zeitpunkt jeweils nur einer von diesen Zeigern aktivierbar ist, um seinen Inhalt als Befehlsadresse an den Befehlsspeicher zu liefern;
- einen Prioritätsniveau-Dekoder (52), der jeder Anforderung (RQ) jeweils ein vorgegebenes Prioritätsniveau beilegt und den Befehlszeiger aktiviert, der jeweils der aktiven Anforderung mit dem höchsten Prioritätsniveau zugeordnet ist;
- Mittel (56) zum Inkrementieren des Inhalts des aktivierten Befehlszeigers und zu dessen Rücksetzung auf die Anfangsadresse des zugeordneten Programms, sobald sein Inhalt die Endadresse des zugeordneten Programms erreicht.

8. System nach Anspruch 7, **dadurch gekennzeichnet, daß** jeder Befehl (I) jeweils ein Kommando-Feld (I2), das der Eefehlsverarbeitungs-Einheit zugeführt wird, und ein Befehlsmerkmals-Feld (I1) aufweist, das einem Präfix- bzw.VorspannDekoder (58) zugeführt wird, welcher umfaßt:
- Mittel (NEXTEN) zur Autorisierung bzw. Freigabe einer neuen Befehlszeiger-Aktivierung durch den Prioritätsniveau-Dekoder, wenn das laufende Befehlsmerkmal-Feld einen ersten vorgegebenen Wert bezitzt, und
- Mittel (INIT) zum Initialisieren des Inhalts des aktivierten Befehlszeigers auf die Anfangsadresse des laufenden Programms, wenn das Befehlsmerkmal-Feld des laufenden Befehls einen zweiten vorgegebenen Wert besitzt.

9. System nach Anspruch 8, **dadurch gekennzeichnet, daß** der Präfix-Dekoder (58) Mittel (INH) umfaßt, um die Inkrementierung des aktivierten Befehlszeigers zu inhibieren bzw. zu sperren, wenn das Befehlsmerkmal-Feld einen vorgegebenen dritten Wert aufweist, derart daß der laufende Befehl mehrmals hintereinander ausgeführt wird, wobei die Anzahl der Ausführungen durch diesen dritten Wert bestimmt wird.

10. System nach Anspruch 7, **dadurch gekennzeichnet, daß** jeder Befehl (I) jeweils ein der Befehlsverarbeitungs-Einheit zugeführtes Kommando-Feld (I2) und ein Quittierungsfeld (I3) aufweist, das Mitteln (59) zugeführt wird, um bei laufender Ausführung des Befehls wenigstens einen mit dem Speicherbus verbundenen Pufferspeicher zu aktivieren.

11. System nach Anspruch 7, **dadurch gekennzeichnet, daß** die Verarbeitungseinheit mehrere verdrahtete Funktionen (50-1) zur Adressenberechnung umfaßt, wobei jede Funktion jeweils durch ein Feld (I4) eines in laufender Durchführung befindlichen Lese- oder Schreibbefehls ausgewählt wird.

12. System nach Anspruch 11, **dadurch gekennzeichnet, daß** jede verdrahtete Funktion jeweils einem mit dem Speicherbus verbundenen Adressenregister (AR) zugeordnet ist, wobei die verdrahtete Funktion dazu vorgesehen ist, um jeweils bei jeder Ausführung eines Befehls in der Verarbeitungseinheit (ALU) den Inhalt ihres Adressenregisters in angemessener Weise zu modifizieren.

## Claims

1. A system for processing compressed image data arriving by packets corresponding to picture blocks, said data packets being separated by headers containing decoding parameters of said packets, said system including several processing elements using said decoding parameters, and a memory bus (MBUS) controlled by a memory controller (24) to exchange said data between the processing elements at rates adapted to the processing rates of said elements, and to store in said picture memory (15) waiting to be processed or for being re-used;
**characterized in that** said system for processing compressed image data comprises a pipeline circuit (11, 12, 13) containing a plurality of said processing elements connected to serially process said data packets; and a parameter bus (VLDBUS) to provide said packets to be processed to the pipeline circuit, as well as the decoding parameters to elements of the system, said parameter bus being controlled by a master processing element (VLD, 10) that receives the compressed data from the memory bus, that extracts the packets and the decoding parameters therefrom through a header detector.

2. The system of claim 1, **characterized in that** each packet of compressed image data is preceded by a block header, and the packets come in successive groups, each group of packets being preceded by a group header containing group decoding parameters as well as, possibly, private and on-screen display information, the system further including:
- a processor bus (PBUS) controlled by a microprocessor (60) to supply the group decoding parameters and the private and on-screen display information to the system elements requiring them;
- a buffer memory (64) accessible by the processor bus, receiving the compressed image data through the memory bus; and
- a group header detector (66) cooperating with said buffer memory to generate interruptions of the microprocessor.

3. The system of claim 1 or 2, **characterized in that** a transfer of data between two elements connected to the memory bus (MBUS) corresponds to a specific task that is initiated or continued when one of the two elements issues a request to provide or to receive data, all the possible tasks being concurrent tasks that are carried out by the memory controller (24) according to a task priority management.

4. The system of claim 3, **characterized in that** the elements which exchange data with the picture memory (15) are connected to the memory bus (MBUS) through respective write- or read-only buffer memories,
a write-only buffer memory being emptied by the associated element and issuing a request to receive data through the memory bus when its content reaches a lower limit, and
a read-only buffer memory being filled by the associated element and issuing a request to provide data on the memory bus when its content reaches an upper limit.

5. The system of claim 4, **characterized in that** it includes:
- a variable length decoder (VLD) forming said master processing element;
- a run-level decoder (RLD) forming a first element of the pipeline circuit and receiving through the parameter bus (VLDBUS) the packets processed by the variable length decoder;
- an inverse quantizer circuit (Q⁻¹) forming a second element of the pipeline circuit and receiving quantizer scale coefficients through the parameter bus;
- an inverse cosine transform circuit (DCT⁻¹) forming a third element of the pipeline circuit;
- the memory controller (24) receiving movement compensation vectors through the parameter bus;
- a filter (14) receiving block types through the parameter bus, said filter issuing distinct requests, according to the block types, to receive corresponding data provided on the memory bus as a function of the vectors received by the memory controller; and
- an adder (16) to provide on the memory bus the sum of the outputs of the filter and of the cosine transform circuit.

6. The system of claim 5, **characterized in that** the group header detector (66) generates interruptions of the microprocessor (60) when the associated buffer memory (64) contains a picture sequence header or a picture header, the microprocessor being programmed to respond to these interruptions by reading, in the buffer memory associated with the group header detector, quantizer tables that the microprocessor provides to the inverse quantizer circuit (Q⁻¹), information on the picture type and on the amplitude of the movement compensation vectors that the microprocessor provides to the variable length decoder (VLD), and information on the display configuration that the microprocessor provides to a display controller (18) which receives the decoded data through the memory bus.

7. The system of claim 3, **characterized in that** the memory controller includes:
- an instruction memory (54), independent of said memory bus (MBUS), in which are stored the program instructions corresponding respectively to transfer tasks on the memory bus;
- a command processing unit (IPROC) that is connected to the instruction memory in order to receive therefrom successive instructions to be executed, and that is connected to act on said memory bus (MBUS) in response to these instructions;
- a plurality of instruction pointers (IP) associated respectively to possible tasks and each including the current instruction address to be executed of the associated task, one only of said pointers being enabled at a time to provide its content as an instruction address to the instruction memory;
- a priority decoder (52) assigning a predetermined priority level to each request (RQ) and enabling the instruction pointer associated with the active request having the highest priority level; and
- means (56) for incrementing the content of the enabled instruction pointer and for reinitializing it at the address of the associated program start when its content reaches the end address of the associated program.

8. The system of claim 7, **characterized in that** each instruction (I) includes a command field (I2) that is provided to the processing unit and a feature field (I1) provided to a prefix decoder (58) including:
- means (NEXTEN) for authorizing the enabling of a new instruction pointer by the priority decoder if the feature field of the current instruction is at a first predetermined value; and
- means (INIT) for initializing the content of the enabled instruction pointer to the start address of the current program if the feature field of the current instruction is at a second predetermined value.

9. The system of claim 8, **characterized in that** the prefix decoder (58) includes means (INH) for inhibiting the incrementation of the enabled instruction pointer if the feature field is at a third predetermined value, so that the current instruction is executed consecutively several times, the number of executions being determined by this third value.

10. The system of claim 7, **characterized in that** each instruction (I) includes a command field (I2) provided to the processing unit and an acknowledge field (I3) provided to means (59) for, when the instruction is being executed, enabling at least one buffer memory connected to the memory bus.

11. The system of claim 7, **characterized in that** the processing unit includes a plurality of hard wired functions (50-1) for the calculation of addresses, each function being selected by a field (I4) of a read or write instruction that is being executed.

12. The system of claim 11, **characterized in that** with each hard wired function is associated an address register (AR) connected to the memory bus, wherein the hard wired function suitably modifies the content of its address register each time an instruction is executed in the processing unit (ALU).
